# EUROPEAN PATENT APPLICATION

(11) **EP 4 729 388 A1**
(43) Date of publication of application: **22.04.2026**
(21) Application number: 25208671.5
(22) Date of filing: 14.10.2025
(51) Int. Cl.: B62B 9/10

(54) **ADJUSTING DEVICE AND CARRIER**

(30) Priority: 15.10.2024 CN 202411440969
(71) Applicant: Wonderland Switzerland AG, 6312 Steinhausen (CH)
(72) Inventor: YIN, Hongtao, Dongguan, Guangdong, 523648 (CN); LIN, Bingsen, Dongguan, Guangdong, 523648 (CN)
(74) Representative: Pfenning, Meinig & Partner mbB

(57) **Abstract**

An adjusting device (2000, 3000, 4000, 5000) includes: a locking member (2200, 3200, 4200) having a locking position and an unlocking position; and an adjusting member (2500, 3500, 4500, 5500) including a fixed end (2540, 3540, 4540, 5540), an operation end (2530, 3530, 4530, 5530), at least two sliding connection parts (2510, 3510, 4510, 5510) and at least one engaging part (2520, 3520, 4520, 5520) that are alternately disposed between the fixed end (2540, 3540, 4540, 5540) and the operation end (2530, 3530, 4530, 5530). Each sliding connection part (2510, 3510, 4510, 5510) is in sliding fit with the locking member (2200, 3200, 4200), allowing the locking member (2200, 3200, 4200) to slide relative to the adjusting member (2500, 3500, 4500, 5500) on the sliding connection part (2510, 3510, 4510, 5510).

## Description

### TECHNICAL FIELD

The present disclosure relates to the technical field of carriers and, more particularly, to an adjusting device and a carrier having the adjusting device.

### BACKGROUND

At present, commonly used carriers (such as child carriers and pet carriers, specifically baby strollers in the category of child carriers) typically include a frame, a seat, and a backrest. When the baby stroller is in an unfolded state, the frame and seat are relatively fixed, while the backrest is rotatable relative to the frame and the seat. The backrest is pivotally connected to the seat to enable adjustment of a tilt angle of the backrest relative to the seat according to different needs, which allows the backrest to be adjusted to different positions relative to the seat, such as an upright position, a reclining position, and a lying-flat position. Accordingly, the baby stroller is usually provided with a mechanism for adjusting the tilt angle of the backrest, and the mechanism is generally located between the frame and the backrest to adjust a distance between the frame and the backrest, thereby adjusting the tilt angle of the backrest relative to the seat.

However, the current mechanism for adjusting the tilt angle of the backrest, which is located between the frame and the backrest, cannot allow for quick adjustment of the backrest among different positions, and cannot effectively alert the user that the backrest has been adjusted to a desired position.

### SUMMARY

The present disclosure aims to provide an adjusting device for adjusting a distance between two members, which is easy to operate, structurally simple, and reliable to use, and also provide a carrier having the adjusting device.

According to a first aspect of the present disclosure, there is provided an adjusting device, including: a locking member having a locking position and an unlocking position; and an adjusting member including a fixed end, an operation end, at least two sliding connection parts and at least one engaging part. The at least two sliding connection parts and the at least one engaging part are alternately disposed between the fixed end and the operation end. Each sliding connection part is in sliding fit with the locking member, to allow the locking member to slide relative to the adjusting member on the sliding connection part. When the locking member is in the locking position, the engaging part blocks the locking member from sliding relative to the adjusting member from a side of the engaging part away from the operation end towards the operation end. When the locking member is in the unlocking position, the locking member is slidable relative to the adjusting member from the side of the engaging part away from the operation end towards the operation end.

According to some embodiments of the present disclosure, the adjusting device further includes a housing defining a channel for the adjusting member to pass through. The locking member is movable relative to the housing between the unlocking position and the locking position. A gap is formed between the locking member and the housing to allow the adjusting member to pass through. When the locking member is in the locking position, in a direction perpendicular to an extension direction of the channel, a minimum width of the gap is less than a maximum width of the engaging part located in the channel and is larger than a maximum width of the sliding connection part located in the channel. When the locking member is in the unlocking position, in the direction perpendicular to the extension direction of the channel, the minimum width of the gap is greater than or equal to the maximum width of the engaging part located in the channel and is greater than the maximum width of the sliding connection part located in the channel.

According to some embodiments of the present disclosure, a circumferential outer surface of each engaging part protrudes outwards with respect to a circumferential outer surface of each sliding connection part.

According to some embodiments of the present disclosure, the housing is provided with a guide hole for the adjusting member to pass through, and the locking member is provided with a locking hole for the adjusting member to pass through; the gap is a portion where the locking hole and the guide hole overlap in the extension direction of the channel.

According to some embodiments of the present disclosure, when the locking member is in the locking position, the minimum width of the gap is defined by a hole wall of the locking hole close to the sliding connection part and a hole wall of the guide hole. The hole wall of the locking hole and the hole wall of the guide hole are located on opposite sides of the sliding connection part in the direction perpendicular to the extension direction of the channel.

According to some embodiments of the present disclosure, each of the engaging parts has a sliding surface and an engaging surface, the sliding surface is close to the operation end, and the engaging surface is close to the fixed end. The sliding surface is inclined relative to a movement direction of the locking member between the locking position and the unlocking position. When the locking member is in the locking position, the engaging surface blocks the locking member from sliding relative to the adjusting member from the side of the engaging part away from the operation end towards the operation end, and the sliding surface allows the locking member to slide relative to the adjusting member from a side of the engaging part close to the operation end towards the fixed end and to move from the locking position to the unlocking position. Optionally, the locking member has a stop surface, wherein the stop surface abuts against the engaging surface in the locking position and is misaligned and separated from the engaging surface in the unlocking position.

According to some embodiments of the present disclosure, the adjusting device further includes: a release member, configured to drive the locking member to move from the locking position to the unlocking position; and a reset member, configured to normally exert on the locking member a force that causes the locking member to return to the locking position.

According to some embodiments of the present disclosure, the adjusting device further includes: a first inclined surface provided on the locking member and inclined relative to a movement direction of the locking member between the locking position and the unlocking position; and a second inclined surface formed on the release member and inclined relative to a movement direction of the release member. The first inclined surface and the second inclined surface are in contact with each other and are slidable relative to each other, so that the movement direction of the release member is convertible into the movement direction of the locking member between the locking position and the unlocking position.

According to some embodiments of the present disclosure, the adjusting member is a pull rope, each sliding connection part is a body of the pull rope, and each engaging part is formed by knotting the pull rope.

According to some embodiments of the present disclosure, the housing includes a first guide hole and a second guide hole, which are located at different sides of the housing and are communication with the receiving chamber; the adjusting member passes through the housing via the first guide hole and the second guide hole.

According to some embodiments of the present disclosure, the locking member includes a locking hole that penetrates the locking member along the extension direction of the channel, and the adjusting member passes through the locking hole inside the housing.

According to some embodiments of the present disclosure, the gap is a portion where the locking hole and the second guide hole overlap in the extension direction of the channel.

According to some embodiments of the present disclosure, the locking member has a sliding mating surface that forms at least a portion of a circumferential wall of the locking hole.

According to some embodiments of the present disclosure, the locking member includes a locking end, and the adjusting member passes through the housing and is clamped between the locking end and the housing.

According to some embodiments of the present disclosure, in the locking position, the width of the gap is defined by a side surface of the locking end close to the sliding connection part and an inner surface of the housing, wherein the side surface of the locking end and the inner surface of the housing are located on opposite sides of the sliding connection part in the direction perpendicular to the extension direction of the channel.

According to some embodiments of the present disclosure, the locking member has a stop surface, wherein the stop surface abuts against the engaging surface in the locking position and is misaligned and separated from the engaging surface in the unlocking position.

According to some embodiments of the present disclosure, the release member includes a pressing end located outside the housing and an abutting end located inside the housing; the pressing end is configured in such a way that force is exerted on the pressing end to overcome a restoring force of the reset member and drive the locking member to move towards the unlocking position.

According to some embodiments of the present disclosure, the pressing end has a groove, an opening direction of the groove being perpendicular to a direction of a pressing force, and the locking member comprises a connecting part extending into the groove and fitted with the groove.

According to some embodiments of the present disclosure, an inner surface of the housing is provided with a first limiting part; the locking member is provided with a positioning part that is configured to abut against the first limiting part in the locking position to maintain the locking member in the locking position.

According to some embodiments of the present disclosure, the inner surface of the housing includes a second limiting part that is spaced apart from the abutting end in the direction perpendicular to the extension direction of the channel; the second limiting part and the abutting end are configured to limit a position of the reset member.

According to a second aspect of the present disclosure, there is provided a carrier, which is mounted with the adjusting device according to any one of the above embodiments. The carrier includes: a seat; a backrest pivotally connected to the seat; and a frame, the seat being fixed relative to the frame when the carrier is in an unfolded state. The fixed end is connected to the frame, and the locking member is connected to the backrest.

The present disclosure may simplify adjustment of the distance between two members of the carrier, enable the user to swiftly adjust the distance between the two members, and clearly inform the user of the distance between the two members, thereby enhancing user experience.

### BRIEF DESCRIPTION OF THE DRAWINGS

FIG. 1 is a perspective view of a carrier provided with an adjusting device according to a first embodiment of the present disclosure.
FIG. 2 is a perspective view of the adjusting device in FIG. 1.
FIG. 3 is a top sectional view of the adjusting device in FIG. 2.
FIG. 3A is a partially enlarged view of the adjusting device taken from FIG. 3 and illustrates that a locking member is in a locking position.
FIG. 3B is a schematic view illustrating that the locking member of FIG. 3A is in an unlocking position.
FIG. 4 is a perspective view of a carrier provided with an adjusting device according to a second embodiment of the present disclosure.
FIG. 5 is a perspective view of the adjusting device in FIG. 4.
FIG. 6 is an exploded view of a partial structure of the adjusting device in FIG. 5.
FIGS. 7A-7B are sectional views of a locking member of FIG. 5 in a locking position, wherein FIG. 7A is a rear sectional view of the adjusting device and FIG. 7B is a top sectional view of the adjusting device.
FIGS. 8A-8B are sectional views of the locking member of FIG. 5 in an unlocking position, wherein FIG. 8A is a rear sectional view of the adjusting device and FIG. 8B is a top sectional view of the adjusting device.
FIG. 9 is a perspective view of a carrier provided with an adjusting device according to a third embodiment of the present disclosure.
FIG. 10 is a perspective view of the adjusting device in FIG. 9.
FIGS. 11A-11B are side sectional views of the adjusting device in FIG. 10, wherein FIG. 11A is a side sectional view of a locking member in a locking position, and FIG. 11B is a side sectional view of the locking member in an unlocking position.
FIG. 12 is a perspective view of an adjusting device according to a fourth embodiment of the present disclosure.

### DETAILED DESCRIPTION

The present disclosure will be described in detail below with reference to the accompanying drawings. An adjusting device according to the present disclosure is used to adjust a relative distance between a first member and a second member, so that the distance between the first member and the second member may be maintained, decreased, or increased. The adjusting device of the present disclosure may be used for various carriers, such as baby carriers and pet carriers, wherein the baby carriers may be baby strollers, baby carrycots, car safety seats, baby high chairs, etc., and the pet carriers may be pet strollers, pet baskets, etc.

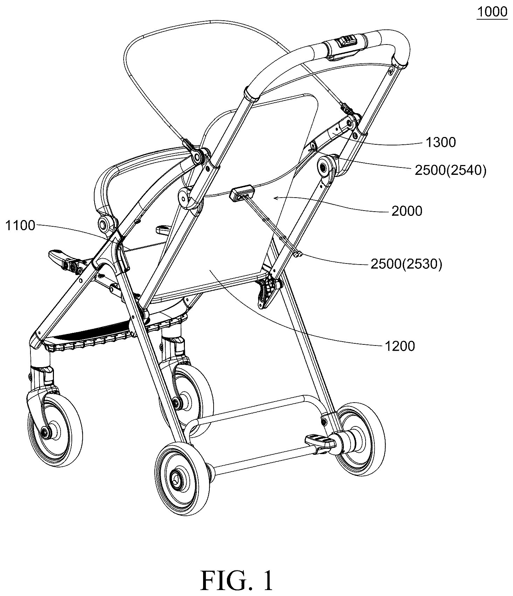

In order to provide a detailed explanation of the technical content and structural features of the present disclosure, a carrier will be exemplified as a baby stroller, and further elaborated below with reference to FIGS. 1-12 and in conjunction with specific embodiments. In addition, for ease of comprehension and description, references to terms such as front, rear, left, right, top and bottom herein are based on orientations of the carrier during normal use (for instance, a direction a child faces when seated in the carrier is front, and a direction the child faces away is rear, and hence the left, right, top and bottom are defined accordingly). It should be understood that the present disclosure is not limited to these orientations, but may be adjusted according to actual situations.

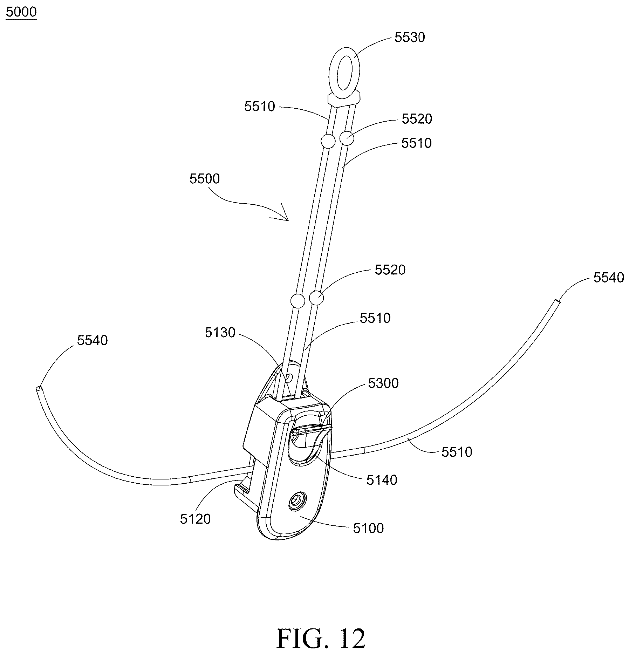

FIGS. 1, 4, and 9 show perspective views of a carrier 1000 provided with an adjusting device 2000, 3000, 4000, respectively. It should be understood that although an assembly diagram of the carrier 1000 with an adjusting device 5000 of FIG. 12 is not shown for the sake of simplicity, the adjusting device 5000 may also be mounted onto the carrier 1000.

As shown in FIGS. 1, 4, and 9, the carrier 1000 includes a seat 1100, a backrest 1200, and a frame 1300. When the carrier 1000 is in an unfolded state (as shown in FIGS. 1, 4, and 9), the seat 1100 is fixed relative to the frame 1300. The adjusting device 2000, 3000, 4000, 5000 may be configured to connect the backrest 1200 and the frame 1300; that is, the first member and the second member may be the backrest 1200 and the frame 1300 respectively, so that a distance between the backrest 1200 and the frame 1300 may be maintained, decreased, or increased. Since the frame 1300 is fixed relative to the seat 1100 and the backrest 1200 is pivotally connected to the seat 1100, the adjusting device 2000, 3000, 4000, 5000 may adjust the distance between the backrest 1200 and the frame 1300 and adjust a tilt angle of the backrest 1200 relative to the seat 1100 simultaneously, to maintain, decrease or increase the tilt angle of the backrest 1200 relative to the seat 1100, so that the backrest 1200 may be adjusted to different positions (such as an upright position, a reclining position, and a lying-flat position) for a user, to allow the user to be seated on the seat 1100 in an upright posture, a reclining posture and a lying-flat posture and rest against the backrest 1200. The pivotal connection between the seat 1100 and the backrest 1200 may be achieved through connecting connectors such as pivot shafts and hinges.

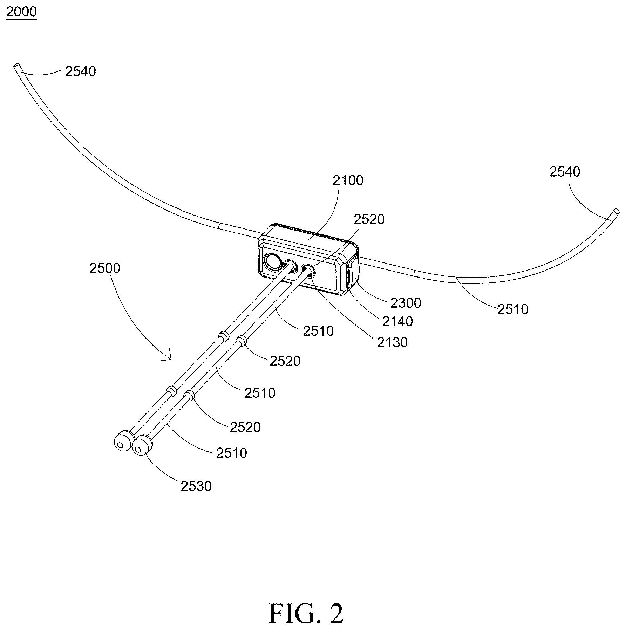

FIGS. 2, 5, 10, and 12 show perspective views of the adjusting device 2000, 3000, 4000, 5000, respectively. The adjusting device 2000, 3000, 4000, 5000 includes an adjusting member 2500, 3500, 4500, 5500 fixed to the frame 1300 (i.e., the second member). The adjusting member 2500, 3500, 4500, 5500 has two or more sliding connection parts 2510, 3510, 4510, 5510 and one or more engaging parts 2520, 3520, 4520, 5520. The sliding connection parts 2510, 3510, 4510, 5510 and the engaging parts 2520, 3520, 4520, 5520 are alternately arranged along an extension direction of the adjusting member 2500, 3500, 4500, 5500, and there is one engaging part 2520, 3520, 4520, 5520 between two adjacent sliding connection parts 2510, 3510, 4510, 5510. That is, the sliding connection parts 2510, 3510, 4510, 5510 and the engaging parts 2520, 3520, 4520, 5520 are arranged periodically, for example, one sliding connection part 2510, 3510, 4510, 5510, followed by one engaging part 2520, 3520, 4520, 5520, then another sliding connection part 2510, 3510, 4510, 5510 and another engaging part 2520, 3520, 4520, 5520, and so on. Optionally, as shown in FIGS. 2, 5, 10, and 12, the adjusting member 2500, 3500, 4500, 5500 has four sliding connection parts 2510, 3510, 4510, 5510, and three engaging parts 2520, 3520, 4520, 5520; the four sliding connection parts 2510, 3510, 4510, 5510 and the three engaging parts 2520, 3520, 4520, 5520 are alternately arranged; and there is one engaging part 2520, 3520, 4520, 5520 between every two adjacent sliding connection parts 2510, 3510, 4510, 5510. In addition, a circumferential outer surface of each engaging part 2520, 3520, 4520, 5520 protrudes outwards with respect to a circumferential outer surface of each sliding connection part 2510, 3510, 4510, 5510.

As shown in FIGS. 2, 5, 10, and 12, the adjusting member 2500, 3500, 4500, 5500 has a fixed end 2540, 3540, 4540, 5540 and an operation end 2530, 3530, 4530, 5530. A plurality of sliding connection parts 2510, 3510, 4510, 5510, and a plurality of engaging parts 2520, 3520, 4520, 5520 are located between the fixed end 2540, 3540, 4540, and the operation end 2530, 3530, 4530, 5530. The fixed end 2540, 3540, 4540, 5540 is configured to be fixed to the frame 1300 (i.e., the second member), while the operation end 2530, 3530, 4530, 5530 is configured to be operated by the user.

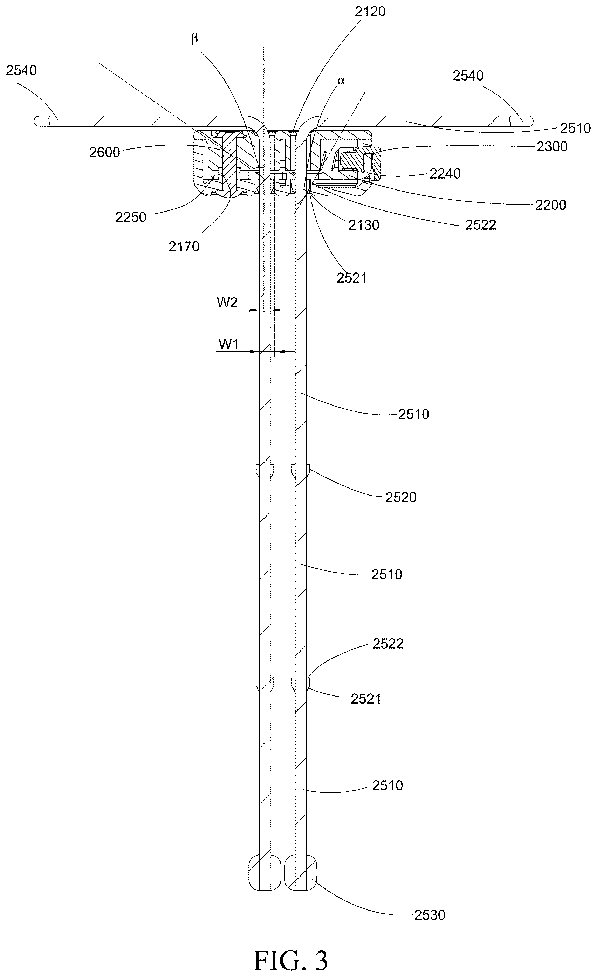

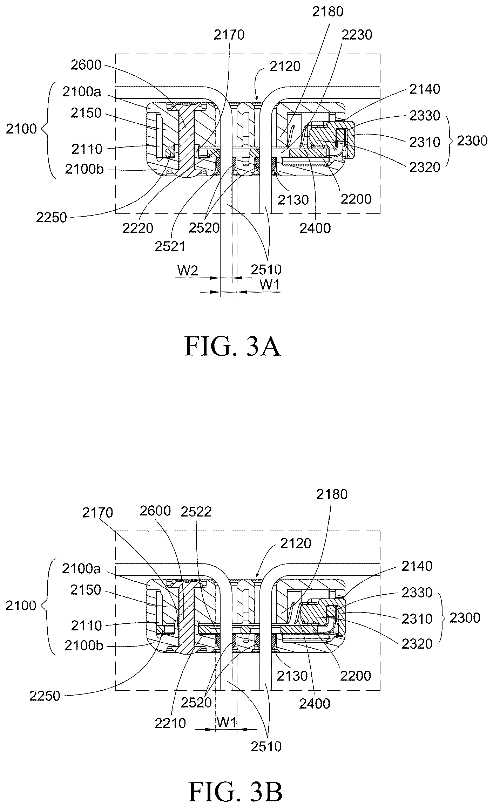

FIGS. 3-3B, 6-8B, and 11A-11B show an internal structure of the adjusting device 2000, 3000, 4000 in sectional views or exploded views, respectively. The adjusting device 2000, 3000, 4000 further includes a locking member 2200, 3200, 4200, which is mounted to the backrest 1200 (i.e., the first member) and has a locking position and an unlocking position. The sliding connection part 2510, 3510, 4510 is in sliding fit with the locking member 2200, 3200, 4200, so that the locking member 2200, 3200, 4200 may slide relative to the adjusting member 2500, 3500, 4500 between the fixed end 2540, 3540, 4540 and the operation end 2530, 3530, 4530. When the locking member 2200, 3200, 4200 is in the locking position, the engaging part 2520, 3520, 4520 may block sliding of the locking member 2200, 3200, 4200 relative to the adjusting member 2500, 3500, 4500 from a side of the engaging part 2520, 3520, 4520 away from the operation end 2530, 3530, 4530 towards the operation end 2530, 3530, 4530. When the locking member 2200, 3200, 4200 is in the unlocking position, the locking member 2200, 3200, 4200 may slide relative to the adjusting member 2500, 3500, 4500 from the side of the engaging part 2520, 3520, 4520 away from the operation end 2530, 3530, 4530 towards the operation end 2530, 3530, 4530. An internal structure of the adjusting device 5000 is identical or similar to that of the adjusting device 4000. Consequently, the adjusting device 5000 also includes a locking member therein, which may switch between a locking position and an unlocking position; the sliding connection part 5510 is in sliding fit with the locking member, to allow the locking member to slide relative to the adjusting member 5500 between the fixed end 5540 and the operation end 5530. Thus, when in the locking position, the locking member is blocked by the engaging part 5520 and cannot slide relative to the adjusting member 5500 from a side of the engaging part 5520 away from the operation end 5530 towards the operation end 5530; and when in the unlocking position, the locking member is not blocked by the engaging part 5520 and can slide relative to the adjusting member 5500 from the side of the engaging part 5520 away from the operation end 5530 towards the operation end 5530.

When any one sliding connection part 2510, 3510, 4510 is in sliding fit with the locking member 2200, 3200, 4200, the locking member 2200, 3200, 4200 may move between the fixed end 2540, 3540, 4540 and the operation end 2530, 3530, 4530 relative to the adjusting member 2500, 3500, 4500 towards either the fixed end 2540, 3540, 4540 or the operation end 2530, 3530, 4530, which may cause a distance between the locking member 2200 and the fixed end 2540, 3540, 4540 to decrease or increase, thereby decreasing or increasing the distance between the backrest 1200 (i.e., the first member) and the frame 1300 (i.e., the second member), i.e., causing the distance between the backrest 1200 (i.e., the first member) and the frame 1300 (i.e., the second member) to change within a certain range, so that an angle between the backrest 1200 and the seat 1100 may decrease or increase. When the locking member 2200, 3200, 4200 is in the locking position, due to obstruction by any one of the plurality of engaging parts 2520, 3520, 4520, the locking member 2200, 3200, 4200 cannot slide from the side of the engaging part 2520, 3520, 4520 away from the operation end 2530, 3530, 4530 towards the operation end 2530, 3530, 4530, thereby preventing the distance between the backrest 1200 (i.e., the first member) and the frame 1300 (i.e., the second member) from further increasing. When the locking member 2200, 3200, 4200 abuts against any one of the engaging parts 2520, 3520, 4520, the locking member 2200, 3200, 4200 may be temporarily fixed relative to the adjusting member 2500, 3500, 4500, so that the distance between the locking member 2200 and the fixed end 2540, 3540, 4540 is maintained at a certain distance value, thereby allowing the backrest 1200 to be positioned at a certain tilt angle relative to the seat 1100. In order to enable the locking member 2200, 3200, 4200 to slide from the side of the engaging part 2520, 3520, 4520 away from the operation end 2530, 3530, 4530 towards the operation end 2530, 3530, 4530 without being obstructed by the engaging part 2520, 3520, 4520, it is necessary to move the locking member 2200, 3200, 4200 from the locking position to the unlocking position.

As shown in FIGS. 1, 4, and 9, in the illustrated embodiment, due to the pivotal connection between the backrest 1200 and the seat 1100, it can be understood that a movement trajectory of the backrest 1200 as well as the locking member 2200, 3200, 4200 fixed to the backrest 1200 is constant, and the engaging parts 2520, 3520, 4520 are positioned along a trajectory of the locking member 2200, 3200, 4200 moving from the fixed end 2540, 3540, 4540 towards the operation end 2530, 3530, 4530, to block the movement of the locking member 2200, 3200, 4200 from the fixed end 2540, 3540, 4540 towards the operation end 2530, 3530, 4530.

For the adjusting device according to the present disclosure, by the alternate or periodical arrangement of the sliding connection parts and the engaging parts, and the selective blockage of the locking member by the engaging parts, when the locking member moves from the fixed end to the engaging part to increase the distance between the locking member and the fixed end, the sliding fit between the locking member and the sliding connection part enables the locking member to be obstructed by the engaging part as quickly as possible, so that the distance between the locking member and the fixed end reaches a certain distance value; moreover, due to the blocking engagement between the locking member and the engaging part, the user may clearly confirm that the distance between the locking member and the fixed end has reached a certain distance value.

As shown in FIGS. 2, 5, and 10, when in the locking position, during movement from the fixed end 2540, 3540, 4540 towards the operation end 2530, 3530, 4530, the locking member 2200, 3200, 4200 is blocked by one of the three engaging parts 2520, 3520, 4520, thereby confining the distance between the locking member 2200, 3200, 4200 and the fixed end 2540, 3540, 4540 to three different distance values, and correspondingly positioning the backrest 1200 at three different tilt angles relative to the seat 1100, which may correspond to the upright position, the reclining position, and the lying-flat position of the backrest 1200; meanwhile, between two adjacent engaging parts 2520, 3520, 4520, the locking member 2200, 3200, 4200 is in sliding fit with the sliding connection part 2510, 3510, 4510, and thus the locking member 2200, 3200, 4200 may quickly move from one engaging part 2520, 3520, 4520 towards the operation end 2530, 3530, 4530 to another engaging part 2520, 3520, 4520, thereby achieving rapid adjustment and positioning of different distances between the locking member 2200, 3200, 4200 and the fixed end 2540, 3540, 4540. Any sliding connection part 2510, 3510, 4510 disposed between two engaging parts 2520, 3520, 4520 has a structure with a preset length dimension and a smooth surface, which may facilitate the smooth and stable sliding of the locking member 2200, 3200, 4200 thereon. The specific preset length dimension may be determined by the user's desired tilt angle of the backrest 1200 relative to the frame 1300.

Specific implementations of a first embodiment will be described in detail with reference to FIGS. 1-3B.

As shown in FIGS. 2-3B, the adjusting device 2000 includes a housing 2100, the locking member 2200, a release member 2300, a reset member 2400, and the adjusting member 2500. The housing 2100 defines a receiving chamber 2110, and both the locking member 2200 and the reset member 2400 are disposed in the receiving chamber 2110. Optionally, the release member 2300 is partially located in the receiving chamber 2110, and partially protrudes out of the housing 2100 to be operated by the user. Alternatively, the release member 2300 is completely located in the receiving chamber 2110 and is partially exposed from the housing 2100 (but not protruding beyond the housing) to be operated by the user. Specifically, the housing 2100 is fixed to the backrest 1200; the locking member 2200 is connected to the housing 2100; the locking member 2200 is mounted to the backrest 1200 through the housing 2100 (as shown in FIG. 1); and the locking member 2200 is movable relative to the housing 2100 between the locking position and the unlocking position. The housing 2100 includes a first guide hole 2120 and a second guide hole 2130, which are located at different sides of the housing 2100 and are communication with the receiving chamber 2110. The adjusting member 2500 passes through the housing 2100; the adjusting member 2500 is a flexible member that may produce a certain degree of bending deformation; and the adjusting member 2500 has the fixed end 2540 fixed to the frame 1300 and the operation end 2530 extending out of the housing 2100. The operation end 2530 of the adjusting member 2500 is relatively close to the second guide hole 2130 and is located outside the second guide hole 2130, while the fixed end 2540 is relatively close to the first guide hole 2120 and is located outside the first guide hole 2120. The operation end 2530 has a larger size than the second guide hole 2130, to prevent the adjusting member 2500 from retracting into the housing 2100 through the second guide hole 2130. The sliding connection part 2510 and the engaging part 2520 of the adjusting member 2500 pass through the housing 2100 via the first guide hole 2120 and the second guide hole 2130. In other words, the first guide hole 2120 and the second guide hole 2130 are in communication with each other and form a channel for the adjusting member 2500 to pass through. A direction of a linear distance between the first guide hole 2120 and the second guide hole 2130 is an extension direction of the channel for the adjusting member 2500 to pass through (as shown by a vertical dashed line in FIG. 3). Since the adjusting member 2500 is composed of the flexible member, the adjusting member 2500 may extend along the direction of the linear distance between the first guide hole 2120 and the second guide hole 2130. Optionally, the first guide hole 2120 and the second guide hole 2130 are arranged in alignment along a straight line. The locking member 2200 is located between the first guide hole 2120 and the second guide hole 2130 in the extension direction of the channel. The locking member 2200 is configured to switch between the locking position and the unlocking position, and is optionally movable between the locking position and the unlocking position in a direction perpendicular to the extension direction of the channel. When the locking member 2200 is in the locking position, at least a portion of the locking member 2200 is located in the channel through which the adjusting member 2500 passes. When the engaging part 2520 comes into contact with the locking member 2200 towards the operation end 2530, the locking member 2200 blocks the engaging part 2520 from moving from one side of the locking member 2200 away from the fixed end 2540 to the other side thereof close to the fixed end 2540 relative to the locking member 2200. In other words, the engaging part 2520 blocks the locking member 2200 from moving from one side of the engaging part 2520 away from the operation end 2530 to the other side thereof close to the operation end 2530. However, the locking member 2200 may be in sliding fit with the sliding connection part 2510; that is, the locking member 2200 will not block movement of the sliding connection part 2510 relative to the locking member 2200; i.e., the locking member 2200 is movable relative to the sliding connection part 2510. When the locking member 2200 is in the unlocking position, the locking member 2200 completely deviates from the channel through which the adjusting member 2500 passes, so that the locking member 2200 no longer blocks movement of the adjusting member 2500 relative to the locking member 2200; in other words, the adjusting member 2500 no longer blocks movement of the locking member 2200. The release member 2300 is configured to drive the locking member 2200 to move from the locking position to the unlocking position. The reset member 2400 is configured to constantly exert, on the locking member 2200, a force that causes the locking member 2200 to return to the locking position.

A gap, through which the sliding connection part 2510 of the adjusting member 2500 passes, is formed between the locking member 2200 and the housing 2100. In the direction perpendicular to the extension direction of the channel, a minimum width W1 of the gap is greater than a maximum width W2 of the sliding connection part 2510 located in the channel (optionally, the width of the sliding connection part 2510 located in the channel in the direction perpendicular to the extension direction of the channel remains consistent along an extension direction of the sliding connection part 2510, as shown in FIG. 3). It can be understood that during the movement of the locking member 2200 between the locking position and the unlocking position, the minimum width W1 of the gap varies, but W1 is greater than W2 in any case. Consequently, the locking member 2200 may move with no obstruction along the sliding connection part 2510, that is, the locking member 2200 may be in sliding fit with the sliding connection part 2510. Additionally, in the locking position, in the direction perpendicular to the extension direction of the channel, the minimum width W1 of the gap is less than a maximum width of the engaging part 2520 located in the channel, and as shown in FIG. 3, the maximum width of the engaging part 2520 located in the channel is a width of an engaging surface 2522, so that the engaging surface 2522 cannot pass through the gap, and the distance between the backrest 1200 and the frame 1300 and meanwhile the angle between the backrest 1200 and the seat 1100 can only be maintained or decreased; moreover, the minimum width W1 of the gap is greater than the maximum width W2 of the sliding connection part 2510 located in the channel, as known from the above, and in the direction perpendicular to the extension direction of the channel, the maximum width of the engaging part 2520 located in the channel is greater than the maximum width W2 of the sliding connection part 2510 located in the channel. In the unlocking position, the minimum width W1 of the gap is greater than the width of the engaging surface 2522 of the engaging part 2520 located in the channel, so that the engaging surface 2522 may pass through the gap to increase or decrease the distance between the backrest 1200 and the frame 1300 and meanwhile the angle between the backrest 1200 and the seat 1100, in which case the minimum width W1 of the gap is also greater than the maximum width W2 of the sliding connection part 2510 located in the channel.

Therefore, in the locking position, the locking member 2200 may remain stationary or move in a first direction relative to the adjusting member 2500, thereby maintaining or decreasing the distance between the backrest 1200 and the frame 1300, and maintaining or decreasing the angle between the seat 1100 and the backrest 1200. That is, in the locking position, the locking member 2200 forms a unidirectional lock with the adjusting member 2500, and the locking member 2200 may still move along the first direction. In the unlocking position, the locking member 2200 may move in the first direction or a second direction relative to the adjusting member 2500, thereby decreasing or increasing the distance between the backrest 1200 and the frame 1300, and decreasing or increasing the angle between the seat 1100 and the backrest 1200, in which the second direction is opposite to the first direction. The first direction refers to a direction from the operation end 2530 to the fixed end 2540, while the second direction refers to a direction from the fixed end 2540 to the operation end 2530. When the locking member 2200 moves in the first direction relative to the adjusting member 2500, a distance between the fixed end 2540 and the locking member 2200 decreases, and accordingly a length of the adjusting member 2500 between the fixed end 2540 and the locking member 2200 shortens, and the angle between the backrest 1200 and the seat 1100 decreases (i.e., the backrest 1200 moves upwards). When the locking member 2200 moves in the second direction relative to the adjusting member 2500, the distance between the fixed end 2540 and the locking member 2200 increases, and accordingly the length of the adjusting member 2500 between the fixed end 2540 and the locking member 2200 lengthens, and the angle between the backrest 1200 and the seat 1100 increases (i.e., the backrest 1200 moves downwards).

On the one hand, this unidirectional locking mechanism simplifies the way the backrest is adjusted, allowing the user to quickly adjust the angle of the backrest upwards without unlocking the locking member, i.e., without need to move the locking member to the unlocking position, which makes it easier for the user to operate with one hand and improves operational efficiency. On the other hand, this unidirectional locking mechanism only permits unidirectional operation, thereby preventing risks associated with reverse operation (moving the backrest downwards). For example, inadvertent reverse operation may increase the length of the adjusting member between the frame and the locking member, thereby increasing the distance between the backrest and the frame, or abruptly widening the angle between the backrest and the sitting part, which could result in injury to the baby or pet seated in the carrier may be injured due to the sudden downward movement of the backrest.

As shown in FIGS. 3 and 3A-3B, each engaging part 2520 has a sliding surface 2521 and the engaging surface 2522, with the sliding surface 2521 close to the operation end 2530 and the engaging surface 2522 close to the fixed end 2540. Thus, when the user pulls the operation end 2530 of the adjusting member 2500 to move the locking member 2200 in the first direction, the sliding surface 2521 first passes through the guide hole of the housing 2100, and then the engaging surface 2522 passes through the guide hole; that is, when the user pulls the operation end 2530 of the adjusting member 2500, the backrest 1200 may move upwards. Conversely, when the user operates the release member 2300 to move the locking member 2200 from the locking position to the unlocking position to be released, thereby allowing the locking member 2200 to move in the second direction, the engaging surface 2522 first passes through the guide hole of the housing 2100, and then the sliding surface 2521 passes through the guide hole; that is, the backrest 1200 may move downwards only after the locking member 2200 is released.

The engaging part 2520 at least partially exhibits a shape of a truncated cone that tapers towards the operation end 2530, and the truncated cone includes the sliding surface 2521. For example, the engaging part 2520 is roughly composed of a cylinder and a truncated cone; the cylinder is located close to the fixed end 2540, while the truncated cone is located close to the operation end 2530; the engaging surface 2522 serves as a base surface of the cylinder (close to the fixed end 2540), while the sliding surface 2521 serves as a circumferential surface of the truncated cone. Alternatively, the engaging part 2520 overall exhibits a truncated cone, i.e., a diameter of the engaging part gradually decreases along the second direction, in which case the engaging surface 2522 serves as a base surface of the truncated cone (close to the fixed end 2540), and the sliding surface 2521 serves as a circumferential surface of the truncated cone. In either of the aforementioned cases, the engaging part 2520 has a maximum diameter at the engaging surface 2522, corresponding to the maximum width of the engaging part 2520 in the direction perpendicular to the extension direction of the channel; and a diameter of the engaging surface 2522 is less than or equal to an inner diameter of the first guide hole 2120 and less than or equal to an inner diameter of the second guide hole 2130, so that the engaging part 2520 may pass through the first guide hole 2120 and the second guide hole 2130 without obstruction. Through the reduction in diameter, the sliding surface 2521 forms a slope, and the slope forms a first angle α with the extension direction of the channel through which the adjusting member 2500 passes.

In the locking position, the locking member 2200 is at least partially located in the channel through which the adjusting member 2500 passes, so that one engaging part 2520 abuts against the locking member 2200 with the engaging surface 2522 or the locking member 2200 is stopped by the engaging surface 2522. That is, the locking member 2200 comes into contact with the engaging surface 2522 towards the operation end 2530, so that the locking member 2200 may remain stationary relative to the adjusting member 2500 when there is no external force. If the user applies a pulling force to the operation end 2530, the locking member 2200 moves in the first direction relative to the adjusting member 2500 towards another engaging part 2520, enabling the other engaging part 2520 to be in sliding fit with the locking member 2200 through the sliding surface 2521, so as to propel the locking member 2200. As a result, the stop of the locking member 2200 by the engaging surface 2522 may be temporarily removed during the sliding fit between the sliding surface 2521 and the locking member 2200, so that the locking member 2200 may move in the first direction relative to the other engaging part 2520. In the unlocking position, the locking member 2200 completely deviates from the channel through which the adjusting member 2500 passes, and the locking member 2200 no longer abuts against the engaging part 2520, so that the locking member 2200 may move in the first direction and the second direction relative to the adjusting member 2500.

The engagement mechanism between the engaging part 2520 of the adjusting member 2500 and the locking member 2200 will be described in detail below.

As shown in FIGS. 3 and 3A-3B, the locking member 2200 includes a locking hole 2230 that penetrates the locking member 2200 along the extension direction of the channel. The adjusting member 2500 passes through the locking hole 2230 inside the housing 2100, that is, the operation end 2530 sequentially passes through the first guide hole 2120, the locking hole 2230, and the second guide hole 2130 to the outside of the housing 2100. The aforementioned gap is a portion where the locking hole 2230 and the second guide hole 2130 overlap in the extension direction of the channel. Specifically, as shown in FIGS. 3 and 3A, in the locking position, the minimum width W1 of the gap is defined by a hole wall of the locking hole 2230 close to the sliding connection part 2510 and a hole wall of the second guide hole 2130, and the hole wall of the locking hole 2230 and the hole wall of the second guide hole 2130 are located on opposite sides of the sliding connection part 2510 in the direction perpendicular to the extension direction of the channel. As mentioned above, the minimum width W1 of the gap is greater than the maximum width W2 of the sliding connection part 2510 located in the channel, so the sliding connection part 2510 may slide freely in the gap.

In addition, the locking member 2200 has a stop surface 2210 that is a surface of the locking member 2200 close to the operation end 2530. Referring to FIGS. 3A and 3B, in the locking position, the stop surface 2210 abuts against the engaging surface 2522, thereby preventing the locking member 2200 from moving in the second direction and thus preventing the backrest 1200 from moving towards the operation end 2530; in the unlocking position, the stop surface 2210 is misaligned and separated from the engaging surface 2522, thereby allowing the backrest 1200 to move towards the operation end 2530 or the fixed end 2540.

Furthermore, the locking member 2200 has a sliding mating surface 2220 that forms at least a portion of a circumferential wall of the locking hole 2230. When the user pulls the operation end 2530, the sliding mating surface 2220 is in sliding fit with the sliding surface 2521 of the engaging part 2520 to overcome a restoring force of the reset member 2400 and push the locking member 2200 towards the unlocking position, so that the locking member 2200 passes over the engaging part 2520 in the first direction, allowing the backrest 1200 to move towards the fixed end 2540. During this process, the locking member 2200 undergoes translational motion within the housing 2100; the sliding mating surface 2220 and the sliding surface 2521 are both inclined relative to a direction of the translational motion; and optionally, the direction of translational motion is perpendicular to the extension direction of the channel. In addition, the sliding mating surface 2220 forms a second angle β with the extension direction of the channel, and the second angle β is greater than or equal to (preferably equal to) the first angle α.

In the direction perpendicular to the extension direction of the channel, a width of the locking hole 2230 itself (or an inner diameter if it is a circular hole) is greater than or equal to the width of the engaging surface 2522 of the engaging part 2520 located in the channel (i.e., the diameter of the engaging surface 2522), so that in the unlocking position, the engaging part 2520 may pass through the first guide hole 2120, the locking hole 2230, and the second guide hole 2130. Specifically, in the locking position, as shown in FIG. 3A, the first guide hole 2120 and the second guide hole 2130 are aligned with each other along the extension direction of the channel, but the locking hole 2230 is partially offset from the first guide hole 2120 and the second guide hole 2130 in the extension direction of the channel, and a size of the portion of the locking hole 2230 that overlaps (i.e., aligns) with the first guide hole 2120 and the second guide hole 2130 in the extension direction of the channel is less than the diameter of the engaging surface 2522 of the engaging part 2520, so that the engaging surface 2522 of the engaging part 2520 abuts against the stop surface 2210, thereby preventing the locking member 2200 from passing over the engaging part 2520 in the second direction. Thus, in the locking position, the locking member 2200 cannot move in the second direction, and the angle of the backrest 1200 relative to the seat 1100 cannot increase, that is, the backrest 1200 cannot move further downwards. In the unlocking position, as shown in FIG. 3B, the first guide hole 2120, the locking hole 2230, and the second guide hole 2130 align with one another along the extension direction of the channel, so that the minimum width W1 of the gap is greater than or equal to the maximum width of the engaging part 2520 in the channel, thereby allowing the locking member 2200 to pass over the engaging part 2520, i.e., movable in the first direction or in the second direction relative to the entire adjusting member 2500, so as to adjust the angle of the backrest 1200 relative to the seat 1100 (i.e., the backrest 1200 moves upwards or downwards). Optionally, the first guide hole 2120, the locking hole 2230, and the second guide hole 2130 have identical hole sizes.

In conclusion, when in the locking position, the locking member 2200 having the locking hole 2230 forms the unidirectional lock with the adjusting member 2500 through the stop surface 2210 and the sliding mating surface 2220, that is, the locking member 2200 may only move in the first direction and cannot move in the second direction.

As shown in FIGS. 1 to 3B, the adjusting device 2000 includes two adjusting members 2500, which are respectively connected to left and right sides of the frame 1300 (specifically, left and right sides of the backrest 1200) and pass through the same housing 2100 and the same locking member 2200. For each adjusting member 2500, the housing 2100 is provided with the corresponding first guide hole 2230 and second guide hole 2130, and the locking member 2200 is provided with the corresponding locking hole 2230. The fixed end 2540 of each adjusting member 2500 is fixed to the frame 1300 on either side of the backrest 1200, for example, by a fixing ring buckle.

As described above, the release member 2300 is configured to drive the locking member 2200 to move from the locking position to the unlocking position. The way in which the release member 2300 is arranged will be described below.

As shown in FIGS. 3A-3B, the housing 2100 includes an opening 2140 in communication with the receiving chamber 2110, and the release member 2300 is movably received in the opening 2140. The release member 2300 includes a pressing end 2310 located outside the receiving chamber 2110 and an abutting end 2320 located inside the receiving chamber 2110. The pressing end 2310 is configured in such a way that force may be exerted on the pressing end to overcome the restoring force of the reset member 2400 and drive the locking member 2200 to move towards the unlocking position.

As shown in FIGS. 3A-3B, the housing 2100 may include a front housing 2100a and a rear housing 2100b, which are connected to each other and define the receiving chamber 2110. As shown in FIGS. 3A-3B, an inner surface of the front housing 2100a is provided with a hollow protruding column 2150, and a fastener 2600 of the adjusting device 2000 is disposed in the protruding column 2150 to secure the front housing 2100a and the rear housing 2100b together, wherein the fastener 2600 includes a bolt and a nut, or a rivet, for example. In addition, the opening 2140 for receiving the release member 2300 may be provided in one of the front housing 2100a and the rear housing 2100b. For example, in this embodiment, the opening 2140 is provided in the rear housing 2100b.

A portion of the release member 2300 extends into the receiving chamber 2110 through the opening 2140 to cooperate with the locking member 2200, thereby driving the locking member 2200 to move from the locking position to the unlocking position. The way in which the release member 2300 cooperates with the locking member 2200 will be described in detail below.

As shown in FIG. 3, the locking member 2200 includes a connecting part 2240 and a positioning part 2250, and the connecting part 2240 is configured to be fixedly connected to the release member 2300. Specifically, in the absence of external force, the locking member 2200 is held in the locking position by the restoring force of the reset member 2400; when the user presses the pressing end 2310 of the release member 2300, due to the fixed connection between the connecting part 2240 of the locking member 2200 and the release member 2300, the release member 2300 overcomes the restoring force of the reset member 2400 and drives the locking member 2200 to move to the unlocking position.

As shown in FIGS. 3A-3B, an inner surface of the housing 2100 (specifically the rear housing 2100b) is provided with a first limiting part 2170. The locking member 2200 is provided with a positioning part 2250 that is configured to abut against the first limiting part 2170 in the locking position to maintain the locking member 2200 in the locking position. For example, the positioning part 2250 is a positioning hole formed on the locking member 2200, and the positioning hole penetrates the locking member 2200 along the extension direction of the channel and is spaced apart from the locking hole 2230 in the direction perpendicular to the extension direction of the channel. The first limiting part 2170 is located in the positioning hole. When the locking member 2200 is in the locking position, in the direction perpendicular to the extension direction of the channel, a hole wall of the positioning hole is in contact with the first limiting part 2170 due to the force of the reset member 2400 (as shown in FIG. 3A), thereby limiting the locking member 2200 in the locking position. When the locking member 2200 is in the unlocking position, the hole wall of the positioning hole may separate from or may contact the first limiting part 2170 (as shown in FIG. 3B). If the hole wall of the positioning hole is still in contact with the first limiting part 2170 in the unlocking position, a displacement range of the locking member 2200 may be restricted by cooperation between the first limiting part 2170 and the positioning part 2250, to prevent its displacement from exceeding the elastic deformation capacity of the reset member 2400, prevent the reset member 2400 from becoming unable to recover deformation, or prevent the locking member 2200 from separating from the reset member 2400 and being unable to achieve contact, which could cause the reset member 2400 to be unable to exert force on the locking member and in turn lead to failure of the entire adjusting device 2000.

In addition, the first limiting part 2170 is also hollow, through which the fastener 2600 may passes, so that the first limiting part 2170 may not only function to limit the locking member 2200, but also mount the fastener 2600, so as to make the internal structure of the housing 2100 more compact. Certainly, the first limiting part 2170 may be omitted from the rear housing 2100b, and the fastener 2600 may serve as the first limiting part to limit the displacement of the locking member 2200 between the locking position and the unlocking position, which helps to reduce the number of elements inside the housing 2100, thereby reducing the size of the housing 2100 or providing more space for the adjusting member 2500 passing through the housing 2100 (in such a case, a thicker adjusting member 2500 may be considered to enhance the force-bearing capacity and safety of the adjusting member 2500).

As shown in FIGS. 3-3B, the pressing end 2310 has a groove 2330, and the connecting part 2240 forms a hook shape and extends into the groove 2330. Optionally, an opening direction of the groove 2330 is perpendicular to a direction of a pressing force. Through the fit between the hook-shaped connecting part 2240 and the groove 2330, the release member 2300 overcomes the restoring force of the reset member 2400 under the action of the pressing force and drives the locking member 2200 to move along the direction of the pressing force to the unlocking position.

In addition, as shown in FIGS. 3A-3B, the inner surface of the housing 2100 further includes a second limiting part 2180 that is spaced apart from the abutting end 2320 in the direction perpendicular to the extension direction of the channel. The second limiting part 2180 and the abutting end 2320 are configured to limit the position of the reset member 2400. The reset member 2400 includes a telescopic spring located inside the receiving chamber 2110; a first end of the telescopic spring abuts against the second limiting part 2180, and a second end thereof is fitted over the abutting end 2320 of the release member 2300. That is, the reset member 2400 is disposed between the housing 2100 and the locking member 2200. A width of the abutting end 2320 in the direction perpendicular to the extension direction of the channel is less than a width of the pressing end 2310 in the direction perpendicular to the extension direction of the channel, so that the second end of the spring fitted over the abutting end 2320 is limited by the pressing end 2310. When the user presses the pressing end 2310 of the release member 2300, the release member 2300 moves towards an interior of the opening 2140 along the direction of the pressing force, so that the telescopic spring fitted over the abutting end 2320 is compressed towards the second limiting part 2180 and stores energy, and the locking member 2200, which is fitted with the release member 2300 through the hook-shaped connecting part 2240, overcomes an elastic force of the telescopic spring and moves in a direction parallel to the pressing force to the unlocking position. When the pressing force disappears, the telescopic spring returns to its original state and drives the release member 2300 to move towards an exterior of the opening 2140, thereby driving the locking member 2200, which forms a hook fit with the release member 2300, to return to the locking position. Optionally, the telescopic spring has a certain degree of pre-compression to better maintain the locking member 2200 in the locking position.

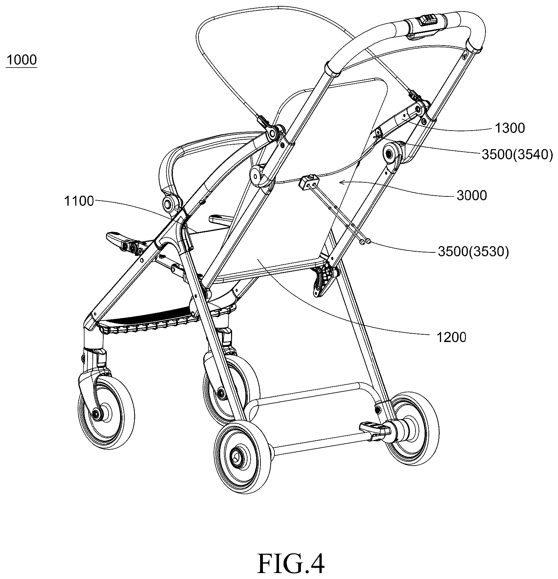

Specific implementations of a second embodiment will be described in detail with reference to FIGS. 4-8B.

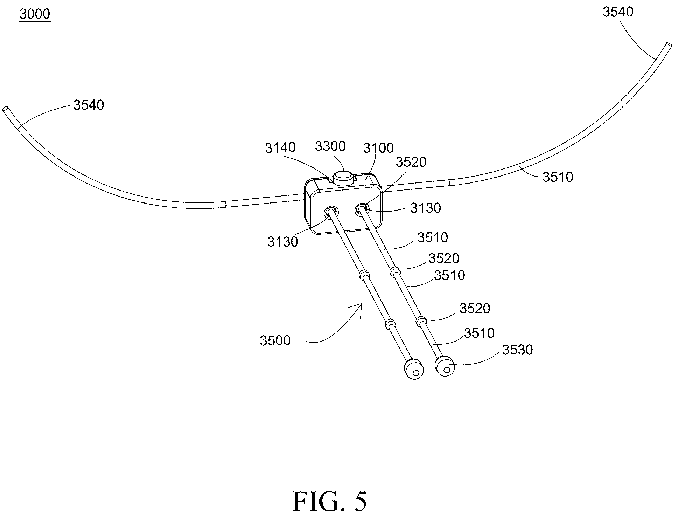

As shown in FIGS. 5-6, the adjusting device 3000 includes a housing 3100, the locking member 3200, a release member 3300, a reset member 3400, and the adjusting member 3500. The housing 3100 defines a receiving chamber 3110, and both the locking member 3200 and the reset member 3400 are disposed in the receiving chamber 3110. Optionally, the release member 3300 is partially located in the receiving chamber 3110, and partially protrudes out of the housing 3100 to be operated by the user. Alternatively, the release member 3300 is completely located in the receiving chamber 3110 and is partially exposed from the housing 3100 (but not protruding beyond the housing) to be operated by the user. Specifically, the housing 3100 is fixed to the backrest 1200; the locking member 3200 is connected to the housing 3100; the locking member 3200 is mounted to the backrest 1200 through the housing 3100 (as shown in FIG. 4); and the locking member 3200 is movable relative to the housing 3100 between the locking position and the unlocking position. The housing 3100 includes a first guide hole 3120 and a second guide hole 3130, which are located at different sides of the housing 3100 and are communication with the receiving chamber 3110. The adjusting member 3500 passes through the housing 3100; the adjusting member 3500 is a flexible member that may produce a certain degree of bending deformation; and the adjusting member 3500 has the fixed end 3540 fixed to the frame 1300 and the operation end 3530 extending out of the housing 3100. The operation end 3530 of the adjusting member 3500 is relatively close to the second guide hole 3130 and is located outside the second guide hole 3130, while the fixed end 3540 is relatively close to the first guide hole 3120 and is located outside the first guide hole 3120. The operation end 3530 has a larger size than the second guide hole 3130, to prevent the adjusting member 3500 from retracting into the housing 3100 through the second guide hole 3130. The sliding connection part 3510 and the engaging part 3520 of the adjusting member 3500 pass through the housing 3100 via the first guide hole 3120 and the second guide hole 3130. In other words, the first guide hole 3120 and the second guide hole 3130 are in communication with each other and form a channel for the adjusting member 3500 to pass through. A direction of a linear distance between the first guide hole 3120 and the second guide hole 3130 is an extension direction of the channel for the adjusting member 3500 to pass through. Since the adjusting member 3500 is composed of the flexible member, the adjusting member 3500 may extend along the direction of the linear distance between the first guide hole 3120 and the second guide hole 3130. Optionally, the first guide hole 3120 and the second guide hole 3130 are arranged in alignment along a straight line. The locking member 3200 is located between the first guide hole 3120 and the second guide hole 3130 in the extension direction of the channel. The locking member 3200 is configured to switch between the locking position and the unlocking position, and is optionally movable between the locking position and the unlocking position in a direction perpendicular to the extension direction of the channel. When the locking member 3200 is in the locking position, at least a portion of the locking member 3200 is located in the channel through which the adjusting member 3500 passes. When the engaging part 3520 comes into contact with the locking member 3200 towards the operation end 3530, the locking member 3200 blocks the engaging part 3520 from moving from one side of the locking member 3200 away from the fixed end 3540 to the other side thereof close to the fixed end 3540 relative to the locking member 3200. In other words, the engaging part 3520 blocks the locking member 3200 from moving from one side of the engaging part 3520 away from the operation end 3530 to the other side thereof close to the operation end 3530. However, the locking member 3200 may be in sliding fit with the sliding connection part 3510; that is, the locking member 3200 will not block movement of the sliding connection part 3510 relative to the locking member 3200; i.e., the locking member 3200 is movable relative to the sliding connection part 3510. When the locking member 3200 is in the unlocking position, the locking member 3200 completely deviates from the channel through which the adjusting member 3500 passes, so that the locking member 3200 no longer blocks movement of the adjusting member 3500 relative to the locking member 3200; in other words, the adjusting member 3500 no longer blocks movement of the locking member 3200. The release member 3300 is configured to drive the locking member 3200 to move from the locking position to the unlocking position. The reset member 3400 is configured to constantly exert, on the locking member 3200, a force that causes the locking member 3200 to return to the locking position.

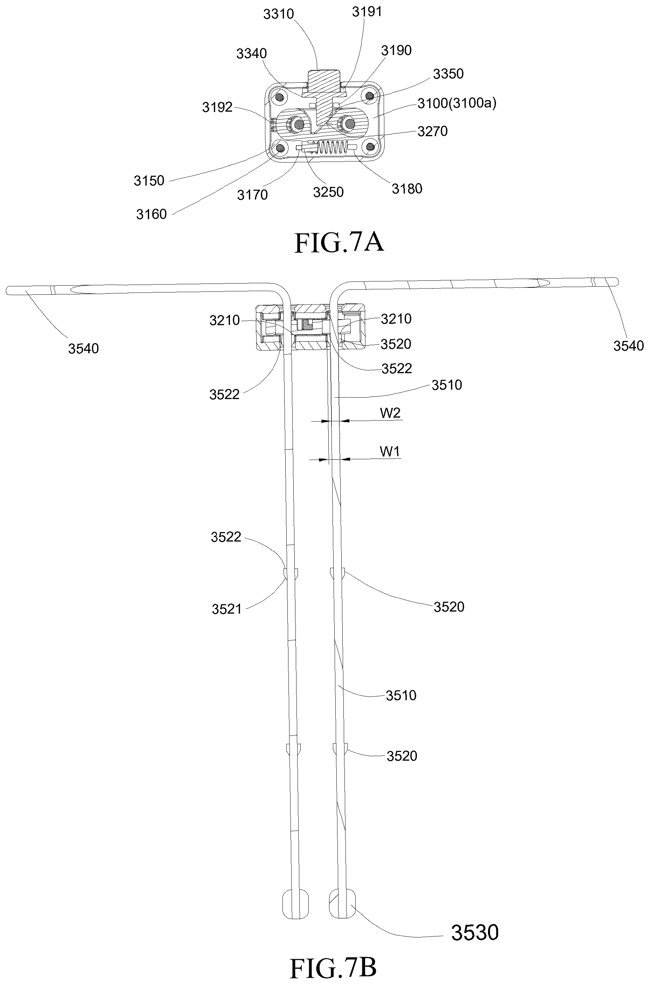

A gap, through which the sliding connection part 3510 of the adjusting member 3500 passes through, is formed between the locking member 3200 and the housing 3100. In the direction perpendicular to the extension direction of the channel, a minimum width W1 of the gap is greater than a maximum width W2 of the sliding connection part 3510 located in the channel (optionally, the width of the sliding connection part 3510 located in the channel in the direction perpendicular to the extension direction of the channel remains consistent along an extension direction of the sliding connection part 3510, as shown in FIG. 7B). It can be understood that during the movement of the locking member 3200 between the locking position and the unlocking position, the minimum width W1 of the gap varies, but W1 is greater than W2 in any case. Consequently, the locking member 3200 may move with no obstruction along the sliding connection part 3510, that is, the locking member 3200 may be in sliding fit with the sliding connection part 3510. Additionally, in the locking position, in the direction perpendicular to the extension direction of the channel, the minimum width W1 of the gap is less than a maximum width of the engaging part 3520 located in the channel, and as shown in FIG. 7B, the maximum width of the engaging part 3520 located in the channel is a width of an engaging surface 3522, so that the engaging surface 3522 cannot pass through the gap, and the distance between the backrest 1200 and the frame 1300 and meanwhile the angle between the backrest 1200 and the seat 1100 can only be maintained or decreased; moreover, the minimum width W1 of the gap is greater than the maximum width W2 of the sliding connection part 3510 located in the channel, as known from the above, and in the direction perpendicular to the extension direction of the channel, the maximum width of the engaging part 3520 located in the channel is greater than the maximum width W2 of the sliding connection part 3510 located in the channel. In the unlocking position, the minimum width W1 of the gap is greater than the width of the engaging surface 3522 of the engaging part 3520 located in the channel, so that the engaging surface 3522 may pass through the gap to increase or decrease the distance between the backrest 1200 and the frame 1300 and meanwhile the angle between the backrest 1200 and the seat 1100, in which case the minimum width W1 of the gap is also greater than the maximum width W2 of the sliding connection part 3510 located in the channel.

Therefore, in the locking position, the locking member 3200 may remain stationary or move in a first direction relative to the adjusting member 3500, thereby maintaining or decreasing the distance between the backrest 1200 and the frame 1300, and maintaining or decreasing the angle between the seat 1100 and the backrest 1200. That is, in the locking position, the locking member 3200 forms a unidirectional lock with the adjusting member 3500, and the locking member 3200 may still move along the first direction. In the unlocking position, the locking member 3200 may move in the first direction or a second direction relative to the adjusting member 3500, thereby decreasing or increasing the distance between the backrest 1200 and the frame 1300, and decreasing or increasing the angle between the seat 1100 and the backrest 1200, in which the second direction is opposite to the first direction. The first direction refers to a direction from the operation end 3530 to the fixed end 3540, while the second direction refers to a direction from the fixed end 3540 to the operation end 3530. When the locking member 3200 moves in the first direction relative to the adjusting member 3500, a distance between the fixed end 3540 and the locking member 3200 decreases, and accordingly a length of the adjusting member 3500 between the fixed end 3540 and the locking member 3200 shortens, and the angle between the backrest 1200 and the seat 1100 decreases (i.e., the backrest 1200 moves upwards). When the locking member 3200 moves in the second direction relative to the adjusting member 3500, the distance between the fixed end 3540 and the locking member 3200 increases, and accordingly the length of the adjusting member 3500 between the fixed end 3540 and the locking member 3200 lengthens, and the angle between the backrest 1200 and the seat 1100 increases (i.e., the backrest 1200 moves downwards).

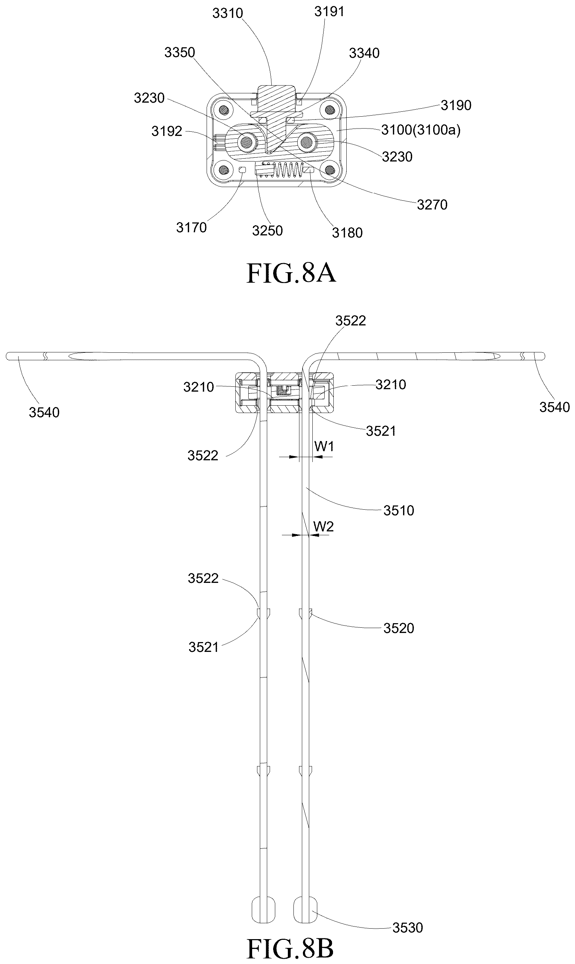

As shown in FIGS. 7B and 8B, each engaging part 3520 has a sliding surface 3521 and the engaging surface 3522, with the sliding surface 3521 close to the operation end 3530 and the engaging surface 3522 close to the fixed end 3540. Thus, when the user pulls the operation end 3530 of the adjusting member 3500 to move the locking member 3200 in the first direction, the sliding surface 3521 first passes through the guide hole of the housing 3100, and then the engaging surface 3522 passes through the guide hole; that is, when the user pulls the operation end 3530 of the adjusting member 3500, the backrest 1200 may move upwards. Conversely, when the user operates the release member 3300 to move the locking member 3200 from the locking position to the unlocking position to be released, thereby allowing the locking member 3200 to move in the second direction, the engaging surface 3522 first passes through the guide hole of the housing 3100, and then the sliding surface 3521 passes through the guide hole; that is, the backrest 1200 may move downwards only after the locking member 3200 is released.

The engaging part 3520 at least partially exhibits a shape of a truncated cone that tapers towards the operation end 3530, and the truncated cone includes the sliding surface 3521. For example, the engaging part 3520 is roughly composed of a cylinder and a truncated cone; the cylinder is located close to the fixed end 3540, while the truncated cone is located close to the operation end 3530; the engaging surface 3522 serves as a base surface of the cylinder (close to the fixed end 3540), while the sliding surface 3521 serves as a circumferential surface of the truncated cone. Alternatively, the engaging part 3520 overall exhibits a truncated cone, i.e., a diameter of the engaging part gradually decreases along the second direction, in which case the engaging surface 3522 serves as a base surface of the truncated cone (close to the fixed end 3540), and the sliding surface 3521 serves as a circumferential surface of the truncated cone. In either of the aforementioned cases, the engaging part 3520 has a maximum diameter at the engaging surface 3522, corresponding to the maximum width of the engaging part 3520 in the direction perpendicular to the extension direction of the channel; and a diameter of the engaging surface 3522 is less than or equal to an inner diameter of the first guide hole 3120 and less than or equal to an inner diameter of the second guide hole 3130, so that the engaging part 3520 may pass through the first guide hole 3120 and the second guide hole 3130 without obstruction.

In the locking position, the locking member 3200 is at least partially located in the channel through which the adjusting member 3500 passes, so that one engaging part 3520 abuts against the locking member 3200 with the engaging surface 3522 or the locking member 3200 is stopped by the engaging surface 3522. That is, the locking member 3200 comes into contact with the engaging surface 3522 towards the operation end 3530, so that the locking member 3200 may remain stationary relative to the adjusting member 3500 when there is no external force. If the user applies a pulling force to the operation end 3530, the locking member 3200 moves in the first direction relative to the adjusting member 3500 towards another engaging part 3520, enabling the other engaging part 3520 to be in sliding fit with the locking member 3200 through the sliding surface 3521, so as to propel the locking member 3200. As a result, the stop of the locking member 3200 by the engaging surface 3522 may be temporarily removed during the sliding fit between the sliding surface 3521 and the locking member 3200, so that the locking member 3200 may move in the first direction relative to the other engaging part 3520. In the unlocking position, the locking member 3200 completely deviates from the channel through which the adjusting member 3500 passes, and the locking member 3200 no longer abuts against the engaging part 3520, so that the locking member 3200 may move in the first direction and the second direction relative to the adjusting member 3500.

The engagement mechanism between the engaging part 3520 of the adjusting member 3500 and the locking member 3200 will be described in detail below.

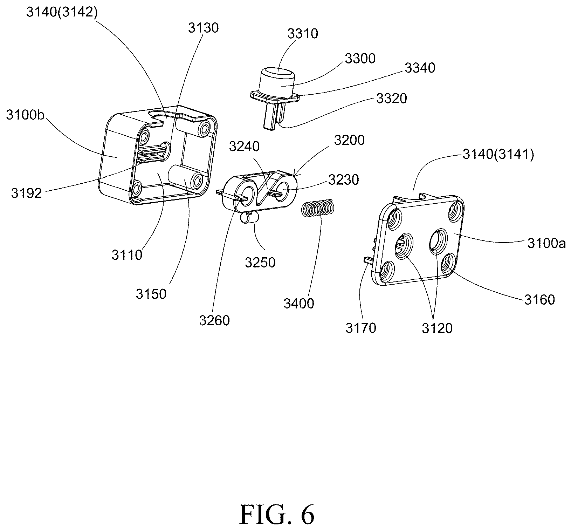

As shown in FIG. 6, the locking member 3200 includes a locking hole 3230 that penetrates the locking member 3200 along the extension direction of the channel. The adjusting member 3500 passes through the locking hole 3230 inside the housing 3100, that is, the operation end 3530 sequentially passes through the first guide hole 3120, the locking hole 3230, and the second guide hole 3130 to the outside of the housing 3100. The aforementioned gap is a portion where the locking hole 3230 and the second guide hole 3130 overlap in the extension direction of the channel. Specifically, as shown in FIG. 7B, in the locking position, the width W1 of the gap is defined by a hole wall of the locking hole 3230 close to the sliding connection part 3510 and a hole wall of the second guide hole 3130, and the hole wall of the locking hole 3230 and the hole wall of the second guide hole 3130 are located on opposite sides of the sliding connection part 3510 in the direction perpendicular to the extension direction of the channel. As mentioned above, the width W1 of the gap is greater than the width W2 of the sliding connection part 3510 located in the channel, so the sliding connection part 3510 may slide freely in the gap.

In addition, the locking member 3200 has a stop surface 3210 that is a surface of the locking member 3200 close to the operation end 3530. Referring to FIGS. 7B and 8B, in the locking position, the stop surface 3210 abuts against the engaging surface 3522, thereby preventing the locking member 3200 from moving in the second direction and thus preventing the backrest 1200 from moving towards the operation end 3530; in the unlocking position, the stop surface 3210 is misaligned and separated from the engaging surface 3522, thereby allowing the backrest 1200 to move towards the operation end 3530 or the fixed end 3540.

Furthermore, the locking member 3200 does not have any sliding mating surface that is in sliding fit with the sliding surface 3521, but it can be understood that an edge of the hole wall of the locking hole 3230 of the locking member 3200 may still achieve the sliding fit with the sliding surface 3521 to overcome a restoring force of the reset member 3400 and push the locking member 3200 towards the unlocking position, so that the locking member 3200 passes over the engaging part 3520 in the first direction, allowing the housing 3100 and thus the backrest 1200 to move towards the fixed end 3540. During this process, the locking member 3200 undergoes translational motion within the housing 3100; the sliding surface 3521 is inclined relative to a direction of the translational motion; and optionally, the direction of translational motion is perpendicular to the extension direction of the channel.

In the direction perpendicular to the extension direction of the channel, a width of the locking hole 3230 itself (or an inner diameter if it is a circular hole) is greater than or equal to the width of the engaging surface 3522 of the engaging part 3520 located in the channel (i.e., the diameter of the engaging surface 3522), so that in the unlocking position, the engaging part 3520 may pass through the first guide hole 3120, the locking hole 3230, and the second guide hole 3130. Specifically, in the locking position, as shown in FIG. 7B, the first guide hole 3120 and the second guide hole 3130 are aligned with each other along the extension direction of the channel, but the locking hole 3230 is partially offset from the first guide hole 3120 and the second guide hole 3130 in the extension direction of the channel, and a size of the portion of the locking hole 3230 that overlaps (i.e., aligns) with the first guide hole 3120 and the second guide hole 3130 in the extension direction of the channel is less than the diameter of the engaging surface 3522 of the engaging part 3520, so that the engaging surface 3522 of the engaging part 3520 abuts against the stop surface 3210, thereby preventing the locking member 3200 from passing over the engaging part 3520 in the second direction. Thus, in the locking position, the locking member 3200 cannot move in the second direction, and the angle of the backrest 1200 relative to the seat 1100 cannot increase, that is, the backrest 1200 cannot move further downwards. In the unlocking position, as shown in FIG. 8B, the first guide hole 3120, the locking hole 3230, and the second guide hole 3130 align with one another along the extension direction of the channel, so that the width W1 of the gap is greater than or equal to the maximum width of the engaging part 3520 in the channel, thereby allowing the locking member 3200 to pass over the engaging part 3520, i.e., movable in the first direction or in the second direction relative to the entire adjusting member 3500, so as to adjust the angle of the backrest 1200 relative to the seat 1100 (i.e., the backrest 1200 moves upwards or downwards). Optionally, the first guide hole 3120, the locking hole 3230, and the second guide hole 3130 have identical hole sizes.

Likewise, when in the locking position, the locking member 3200 having the locking hole 3230 forms the unidirectional lock with the adjusting member 3500, that is, the locking member 3200 may only move in the first direction and cannot move in the second direction.

As shown in FIGS. 4, 5, 7B and 8B, the adjusting device 3000 includes two adjusting members 3500, which are respectively connected to left and right sides of the frame 1300 (specifically, left and right sides of the backrest 1200) and pass through the same housing 3100 and the same locking member 3200. For each adjusting member 3500, the housing 3100 is provided with the corresponding first guide hole 3230 and second guide hole 3130, and the locking member 3200 is provided with the corresponding locking hole 3230. The fixed end 3540 of each adjusting member 3500 is fixed to the frame 1300 on either side of the backrest 1200, for example, by a fixing ring buckle.

As described above, the release member 3300 is configured to drive the locking member 3200 to move from the locking position to the unlocking position. The way in which the release member 3300 is arranged will be described below.

As shown in FIGS. 5-6, the housing 3100 includes an opening 3140 in communication with the receiving chamber 3110, and the release member 3300 is movably received in the opening 3140. The release member 3300 includes a pressing end 3310 located outside the receiving chamber 3110 and an abutting end 3320 located inside the receiving chamber 3110. The pressing end 3310 is configured in such a way that force may be exerted on the pressing end to overcome the restoring force of the reset member 3400 and drive the locking member 3200 to move towards the unlocking position.

As shown in FIG. 6, the housing 3100 may include a front housing 3100a and a rear housing 3100b, which are connected to each other and define the receiving chamber 3110. The front housing 3100a includes a first notch 3141; the rear housing 4100b includes a second notch 3142; and the first notch 3141 and the second notch 3142 are spliced to form the opening 3140.

As shown in FIGS. 6 and 7A, an inner surface of one (e.g., the rear housing 3100b) of the front housing 3100a and the rear housing 3100b is provided with a plurality of hollow protruding columns 3150, and an inner surface of the other (e.g., the front housing 3100a) thereof is provided with a plurality of hollow protrusions 3160 in one-to-one correspondence with the plurality of protruding columns 3150. The adjusting device 3000 is provided with a plurality of fasteners (not shown), and each fastener passes through one protrusion 3160 and one protruding column 3150 arranged corresponding to each other to secure the front housing 3100a and the rear housing 3100b together, wherein the fasteners include bolts and nuts, or rivets, for example. In addition, the present disclosure does not limit the number of protruding columns 3150, protrusions 3160, and fasteners.

A portion of the release member 3300 extends into the receiving chamber 3110 through the opening 3140 to cooperate with the locking member 3200, thereby driving the locking member 3200 to move from the locking position to the unlocking position. The way in which the release member 3300 cooperates with the locking member 3200 will be described in detail below.

As shown in FIGS. 6, 7A and 8A, the locking member 3200 includes a connecting part 3240 and a positioning part 3250, and the connecting part 3240 is configured to be movably connected to (specifically, abut against) the release member 3300. Specifically, in the absence of external force, the locking member 3200 is held in the locking position by the restoring force of the reset member 3400; when the user presses the pressing end 3310 of the release member 3300, due to the abutment between the connecting part 3240 of the locking member 3200 and the release member 3300, the release member 3300 overcomes the restoring force of the reset member 3400 and drives the locking member 3200 to move to the unlocking position. The movable connection between the connecting part 3240 and the release member 3300 may not exist when the locking member 3200 is in the locking position; that is, the connecting part 3240 and the release member 3300 are spaced apart, and the release member 3300 will be movably connected to the connecting part 3240 only after the release member 3300 moves to a certain distance.

Specifically, the connecting part 3240 is provided with a first inclined surface 3270 that is inclined relative to a movement direction of the locking member 3200 and a pressing direction of the release member 3300, and the abutting end 3320 is formed with a second inclined surface 3350 that is inclined relative to the movement direction of the locking member 3200 and the pressing direction of the release member 3300. The first inclined surface 3270 and the second inclined surface 3350 abut against each other and are slidable relative to each other, so that movement of the release member 3300 along the pressing direction may be converted into sliding of the locking member 3200 along the movement direction. A gradient of the first inclined surface 3270 matches a gradient of the second inclined surface 3350. Through the sliding fit between the first inclined surface 3270 and the second inclined surface 3350, the release member 3300 overcomes the restoring force of the reset member 3400 under the action of the pressing force and drives the locking member 3200 to move to the unlocking position. Due to the fit between the inclined surfaces and the constraint of the movement of the locking member 3200 by other parts (which will be described later), the movement direction of the locking member 3200 is perpendicular to the movement direction of the release member 3300.

In this case, as shown in FIG. 6, the locking member 3200 includes two locking holes 3230, and the first inclined surface 3270 (marked in FIG. 7A) formed at the connecting part 3240 is located between the two locking holes 3230. Specifically, a portion of the locking member 3200 located between the two locking holes 3210 is partially weakened in the extension direction of the channel to provide space for the abutting end 3320 of the release member 3300, and forms the first inclined surface 3270 for sliding fit with the second inclined surface 3350 of the abutting end 3320. Since the first inclined surface 3270 is formed between the two locking holes 3230, roughly located in the middle of the locking member 3200, when the abutting end 3320 pushes the locking member 3200 through the fit between the inclined surfaces, the entire locking member 3200 may be subjected to a more balanced force and may move more steadily during switch between the locking position and the unlocking position.

As shown in FIGS. 7A and 8A, an inner surface of the housing 3100 (specifically the front housing 3100a) is provided with a first limiting part 3170. The locking member 3200 is provided with a positioning part 3250 that is configured to abut against the first limiting part 3170 in the locking position to maintain the locking member 3200 in the locking position. For example, the positioning part 2250 is formed as a protrusion extending from a body of the locking member 3200. When the locking member 3200 is in the locking position, in the direction perpendicular to the extension direction of the channel, the positioning part 3250 is in contact with the first limiting part 3170 due to the force of the reset member 3400 (as shown in FIG. 7A), thereby limiting the locking member 3200 in the locking position. When the locking member 3200 is in the unlocking position, the positioning part 3250 separates from the first limiting part 3170 (as shown in FIG. 8A). Thus, a locking position of the locking member 3200 may be restricted by cooperation between the first limiting part 3170 and the positioning part 3250, to prevent the locking member 3200 from separating from the reset member 3400 and becoming unable to achieve contact, which could cause the reset member 3400 to be unable to exert force on the locking member and in turn lead to failure of the entire adjusting device.

In addition, FIGS. 7A and 8A also show a second limiting part 3180 on the inner surface of the front housing 3100a, which is spaced apart from the positioning part 3250 in the direction perpendicular to the extension direction of the channel. The second limiting part 3180 and the positioning part 3250 are configured to limit the position of the reset member 3400. The reset member 3400 includes a telescopic spring located inside the accommodating chamber 3110; a first end of the telescopic spring abuts against the second limiting part 3180, and a second end thereof is fitted over the positioning part 3250 of the locking member 3200. That is, the reset member 3400 is disposed between the housing 3100 and the locking member 3200. Optionally, the positioning part 3250 is L-shaped, and the second end of the telescopic spring is fitted over a transverse leg of the L shape and stopped by a vertical leg of the L shape. When the user presses the pressing end 3310 of the release member 3300, the release member 3300 moves towards an interior of the opening 3140 along the direction of the pressing force, and the locking member 3200, which is fitted with the release member 3300 through inclined surfaces, overcomes an elastic force of the telescopic spring and moves in a direction perpendicular to the pressing force to the unlocking position. At this time, the positioning part 3250 of the locking member 3200 moves in a direction away from the first limiting part 3170, thereby driving the telescopic spring fitted over the positioning part 3250 to be compressed towards the second limiting part 3180 and store energy. When the pressing force disappears, the telescopic spring returns to its original state and drives the positioning part 3250 to move in a direction towards the first limiting part 3170, thereby driving the entire locking member 3200 to return to the locking position. At this point, the release member 3300, which is fitted with the locking member 3200 through inclined surfaces, is pushed towards an exterior of the opening 3140. Optionally, the telescopic spring has a certain degree of pre-compression to better maintain the locking member 3200 in the locking position.

In addition, as shown in FIGS. 7A and 8A, the inner surface of the front housing 3100a is further provided with a third limiting part 3190 and a fourth limiting part 3191, which are configured to limit a displacement range of the release member 3300. A middle portion of the release member 3300 between the pressing end 3310 and the abutting end 3320 forms a flange 3340, and the flange 3340 is located inside the receiving chamber 3110. Moreover, a size of the opening 3140 is greater than or equal to a size of the pressing end 3310 and is less than a size of the flange 3340. The third limiting part 3190 and the fourth limiting part 3191 both protrude beyond a main body of the front housing 3100a along the extension direction of the channel to abut against the flange 3340, in order to limit the displacement of the release member 3300 in an up-down direction after the release member 3300 is mounted laterally to the front housing 3100a, and prevent the release member 3300 from completely coming out of the housing 3100a in the up-down direction.

Specifically, when the pressing force is applied to the pressing end 3310, the pressing end 3310 may move in a direction of entering the opening 3140, and at this time, the third limiting part 3190 limits a limit position of downward movement of the release member 3300 by abutting against the flange 3340. When the pressing force disappears, the positioning part 3250 moves in the direction towards the first limiting part 3170 under the action of the reset member 3400, driving the entire locking member 3200 to return to the locking position, and driving the release member part 3300 to move back, and at this time, the fourth limiting part 3191 limits a limit position of upward movement of the release member part 3300 by abutting against the flange 3340. The third limiting part 3190 and the fourth limiting part 3191 also have a guiding effect during the upward and downward movement of the release member 3300.

Optionally, the inner surface of the front housing 3100a may not be provided with the fourth limiting part 3191. In such a case, when the release member 3300 moves upwards and the flange 3340 returns to the opening 3140, due to the larger size of the flange 3340 than the opening 3140, the flange 3340 abuts against an edge of the opening 3140, preventing further movement of the release member 3300 and preventing it from coming out of the front housing 3100a through the opening 3140.

In addition, as shown in FIGS. 6, 7A, and 8A, the inner surface of the housing 3100 further has a guide groove 3192. Specifically, the guide groove 3192 is provided on the inner surface of each of the front housing 3100a and the rear housing 3100b, and the locking member 3200 has a guide rib 3260 on at least one of its front and rear surfaces. The guide rib 3260 is movably fitted in the corresponding guide groove 3192, wherein the front and rear surfaces of the locking member 3200 refer to two opposite surfaces in the extension direction of the channel. When the locking member 3200 switches between the locking position and the unlocking position under the external force applied by the user or the restoring force applied by the reset member 3400, the locking member 3200 moves along the guide groove 3192 through the fit between the guide rib 3260 and the guide groove 3192. By the fit between the guide rib 3260 and the guide groove 3192, the locking member 3200 may move along a predetermined path to ensure the smooth position switch. Optionally, the guide groove 3192 extends in a left-right direction as shown in the figures (i.e., a length direction of the locking member 3200). Optionally, the guide groove 3192 is defined by at least two baffles disposed on the inner surface of the housing 3100, which is more conducive to ensuring the structural strength and stability of the housing 3100, compared to formation of the guide groove by partially recessing the inner surface of the housing (i.e., reducing the thickness of a portion of the housing).

During the assembly of the adjusting device, the following method may be used: first placing the front housing 3100a in reverse on the table; mounting the locking member 3200, the reset member 3400, and the release member 3300 to the front housing 3100a; then covering the rear housing 3100b onto the front housing 3100a; and finally mounting the fastener to the front housing 3100a and the rear housing 3100b. The fourth limiting part 3191 protrudes towards the rear housing 3100b beyond a groove wall of the guide groove 3192, thus better guiding the assembly of the front housing 3100a and the rear housing 3100b.

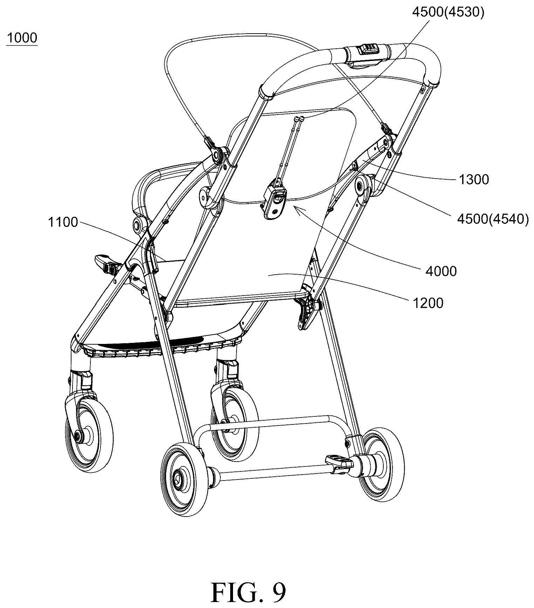

Specific implementations of a third embodiment will be described in detail with reference to FIGS. 9-11B.

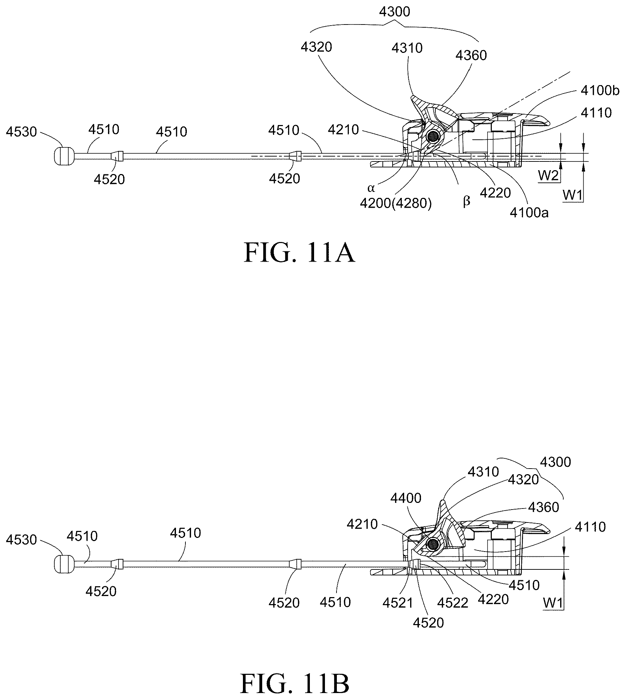

FIGS. 9-10 show external structures of an adjusting device 4000 in perspective views; and FIGS. 11A-11B show internal structures of the adjusting device 4000 in sectional views. The adjusting device 4000 includes a housing 4100, a locking member 4200, a release member 4300, a reset member 4400, and an adjusting member 4500. The housing 4100 defines a receiving chamber 4110. Optionally, the housing 4100 may include a front housing 4100a and a rear housing 4100b, which are connected to each other and define the receiving chamber 4110. The locking member 4200 and the reset member 4400 are both disposed in the receiving chamber 4110. Optionally, the release member 4300 is partially located in the receiving chamber 4110, and partially protrudes out of the housing 4100 to be operated by the user. Alternatively, the release member 4300 is completely located in the receiving chamber 4110 and is partially exposed from the housing 4100 (but not protruding beyond the housing) to be operated by the user. Specifically, the housing 4100 is fixed to the backrest 1200; the locking member 4200 is connected to the housing 4100; the locking member 4200 is mounted to the backrest 4200 through the housing 4100 (as shown in FIG. 9). The housing 4100 includes a first guide hole 4120 and a second guide hole 4130, which are located at different sides of the housing 4100 and are communication with the receiving chamber 4110. The adjusting member 4500 passes through the housing 4100; the adjusting member 4500 is a flexible member that may produce a certain degree of bending deformation; and the adjusting member 4500 has the fixed end 4540 fixed to the frame 1300 and the operation end 4530 extending out of the housing 4100. The operation end 4530 of the adjusting member 4500 is relatively close to the second guide hole 4130 and is located outside the second guide hole 4130, while the fixed end 4540 is relatively close to the first guide hole 4120 and is located outside the first guide hole 4120. The operation end 4530 has a larger size than the second guide hole 4130, to prevent the adjusting member 4500 from retracting into the housing 4100 through the second guide hole 4130. The sliding connection part 4510 and the engaging part 4520 of the adjusting member 4500 pass through the housing 4100 via the first guide hole 4120 and the second guide hole 4130. In other words, the first guide hole 4120 and the second guide hole 4130 are in communication with each other and form a channel for the adjusting member 4500 to pass through. A direction of a linear distance between the first guide hole 4120 and the second guide hole 4130 is an extension direction of the channel for the adjusting member 4500 to pass through (as shown in FIG. 11A). Since the adjusting member 4500 is composed of the flexible member, the adjusting member 4500 may extend along the direction of the linear distance between the first guide hole 4120 and the second guide hole 4130. The locking member 4200 is configured to be switchable between the locking position and the unlocking position. When the locking member 4200 is in the locking position, at least a portion of the locking member 4200 is located in the channel through which the adjusting member 4500 passes. When the engaging part 4520 comes into contact with the locking member 4200 towards the operation end 4530, the locking member 4200 blocks the engaging part 4520 from moving from one side of the locking member 4200 away from the fixed end 4540 to the other side thereof close to the fixed end 4540 relative to the locking member 4200. In other words, the engaging part 4520 blocks the locking member 4200 from moving from one side of the engaging part 4520 away from the operation end 4530 to the other side thereof close to the operation end 4530. However, the locking member 4200 may be in sliding fit with the sliding connection part 4510; that is, the locking member 4200 will not block movement of the sliding connection part 4510 relative to the locking member 4200; i.e., the locking member 4200 is movable relative to the sliding connection part 4510. When the locking member 4200 is in the unlocking position, the locking member 4200 completely deviates from the channel through which the adjusting member 4500 passes, so that the locking member 4200 no longer blocks movement of the adjusting member 4500 relative to the locking member 4200; in other words, the adjusting member 4500 no longer blocks movement of the locking member 4200. The release member 4300 is configured to drive the locking member 4200 to move from the locking position to the unlocking position. The reset member 4400 is configured to constantly exert, on the locking member 4200, a force that causes the locking member 4200 to return to the locking position.

A gap, through which the sliding connection part 4510 of the adjusting member 4500 passes through, is formed between the locking member 4200 and the housing 4100. In the direction perpendicular to the extension direction of the channel, a minimum width W1 of the gap is greater than a maximum width W2 of the sliding connection part 4510 located in the channel (optionally, the width of the sliding connection part 4510 located in the channel in the direction perpendicular to the extension direction of the channel remains consistent along an extension direction of the sliding connection part 4510, as shown in FIG. 11A). It can be understood that during the movement of the locking member 4200 between the locking position and the unlocking position, the minimum width W1 of the gap varies, but W1 is greater than W2 in any case. Consequently, the locking member 4200 may move with no obstruction along the sliding connection part 4510, that is, the locking member 4200 may be in sliding fit with the sliding connection part 4510. Additionally, in the locking position, in the direction perpendicular to the extension direction of the channel, the minimum width W1 of the gap is less than a maximum width of the engaging part 4520 located in the channel, and as shown in FIG. 11A, the maximum width of the engaging part 4520 located in the channel is a width of an engaging surface 4522, so that the engaging surface 4522 cannot pass through the gap, and the distance between the backrest 1200 and the frame 1300 and meanwhile the angle between the backrest 1200 and the seat 1100 can only be maintained or decreased. As known from the above, in the direction perpendicular to the extension direction of the channel, the maximum width of the engaging part 4520 located in the channel is greater than the maximum width W2 of the sliding connection part 4510 located in the channel. In the unlocking position, the width W1 of the gap is greater than the width of the engaging surface 4522 of the engaging part 4520 located in the channel, so that the engaging surface 4522 may pass through the gap to increase or decrease the distance between the backrest 1200 and the frame 1300 and meanwhile the angle between the backrest 1200 and the seat 1100.

Therefore, in the locking position, the locking member 4200 may remain stationary or move in a first direction relative to the adjusting member 4500, thereby maintaining or decreasing the distance between the backrest 1200 and the frame 1300, and maintaining or decreasing the angle between the seat 1100 and the backrest 1200. That is, in the locking position, the locking member 4200 forms a unidirectional lock with the adjusting member 4500, and the locking member 4200 may still move along the first direction. In the unlocking position, the locking member 4200 may move in the first direction or a second direction relative to the adjusting member 4500, thereby decreasing or increasing the distance between the backrest 1200 and the frame 1300, and decreasing or increasing the angle between the seat 1100 and the backrest 1200, in which the second direction is opposite to the first direction. The first direction refers to a direction from the operation end 4530 to the fixed end 4540, while the second direction refers to a direction from the fixed end 4540 to the operation end 4530. When the locking member 4200 moves in the first direction relative to the adjusting member 4500, a distance between the fixed end 4540 and the locking member 4200 decreases, and accordingly a length of the adjusting member 4500 between the fixed end 4540 and the locking member 4200 shortens, and the angle between the backrest 1200 and the seat 1100 decreases (i.e., the backrest 1200 moves upwards). When the locking member 4200 moves in the second direction relative to the adjusting member 4500, the distance between the fixed end 4540 and the locking member 4200 increases, and accordingly the length of the adjusting member 4500 between the fixed end 4540 and the locking member 4200 lengthens, and the angle between the backrest 1200 and the seat 1100 increases (i.e., the backrest 1200 moves downwards).

As shown in FIGS. 11A-11B, each engaging part 4520 has a sliding surface 4521 and the engaging surface 4522, with the sliding surface 4521 close to the operation end 4530 and the engaging surface 4522 close to the fixed end 4540. Thus, when the user pulls the operation end 4530 of the adjusting member 4500 to move the locking member 4200 in the first direction, the sliding surface 4521 first passes through the guide hole of the housing 4100, and then the engaging surface 4522 passes through the guide hole; that is, when the user pulls the operation end 4530 of the adjusting member 4500, the backrest 1200 may move upwards. Conversely, when the user operates the release member 4300 to move the locking member 4200 from the locking position to the unlocking position to be released, to allow the locking member 4200 to move in the second direction, the engaging surface 4522 first passes through the guide hole of the housing 4100, and then the sliding surface 4521 passes through the guide hole; that is, the backrest 1200 may move downwards only after the locking member 4200 is released.

The engaging part 4520 at least partially exhibits a shape of a truncated cone that tapers towards the operation end 4530, and the truncated cone includes the sliding surface 4521. For example, the engaging part 4520 is roughly composed of a cylinder and a truncated cone; the cylinder is located close to the fixed end 4540, while the truncated cone is located close to the operation end 4530; the engaging surface 4522 serves as a base surface of the cylinder (close to the fixed end 4540), while the sliding surface 4521 serves as a circumferential surface of the truncated cone. Alternatively, the engaging part 4520 overall exhibits a truncated cone, i.e., a diameter of the engaging part gradually decreases along the second direction, in which case the engaging surface 4522 serves as a base surface of the truncated cone (close to the fixed end 4540), and the sliding surface 4521 serves as a circumferential surface of the truncated cone. In either of the aforementioned cases, the engaging part 4520 has a maximum diameter at the engaging surface 4522, corresponding to the maximum width of the engaging part 4520 in the direction perpendicular to the extension direction of the channel; and a diameter of the engaging surface 4522 is less than or equal to an inner diameter of the first guide hole 4120 and less than or equal to an inner diameter of the second guide hole 4130, so that the engaging part 4520 may pass through the first guide hole 4120 and the second guide hole 4130 without obstruction. Through the reduction in diameter, the sliding surface 4521 forms a slope, and the slope forms a first angle α with the extension direction of the channel through which the adjusting member 4500 passes.

In the locking position, the locking member 4200 is at least partially located in the channel through which the adjusting member 4500 passes, so that one engaging part 4520 abuts against the locking member 4200 with the engaging surface 4522 or the locking member 4200 is stopped by the engaging surface 4522. That is, the locking member 4200 comes into contact with the engaging surface 4522 towards the operation end 4530, so that the locking member 4200 may remain stationary relative to the adjusting member 4500 when there is no external force. If the user applies a pulling force to the operation end 4530, the locking member 4200 moves in the first direction relative to the adjusting member 4500 towards another engaging part 4520, enabling the other engaging part 4520 to be in sliding fit with the locking member 4200 through the sliding surface 4521, so as to propel the locking member 4200. As a result, the stop of the locking member 4200 by the engaging surface 4522 may be temporarily removed during the sliding fit between the sliding surface 4521 and the locking member 4200, so that the locking member 4200 may move in the first direction relative to the other engaging part 4520. In the unlocking position, the locking member 4200 completely deviates from the channel through which the adjusting member 4500 passes, and the locking member 4200 no longer abuts against the engaging part 4520, so that the locking member 4200 may move in the first direction and the second direction relative to the adjusting member 4500.

The engagement mechanism between the engaging part 4520 of the adjusting member 4500 and the locking member 4200 will be described in detail below.

As shown in FIGS. 11A-11B, the locking member 4200 includes a locking end 4280, and the adjusting member 4500 passes through the housing 4100 and is clamped between the locking end 4280 and the housing 4100. In the locking position, the width W1 of the gap mentioned above is defined by a side surface of the locking end 4280 close to the sliding connection part 4510 and an inner surface of the housing 4100 (or the front housing 4100a), wherein the side surface of the locking end 4280 and the inner surface of the housing 4100 are located on opposite sides of the sliding connection part 4510 in the direction perpendicular to the extension direction of the channel. Specifically, as shown in FIG. 11A, in the locking position, the width W1 of the gap is defined by the inner surface of the front housing 4100a and the side surface of the locking end 4280 closest to the front housing 4100a. Since the width W1 of the gap is greater than the width W2 of the sliding connection part 4510 located in the channel, the locking end 4280 may slide freely in the gap.

The locking member 4200 (specifically the locking end 4280) may switch between the locking position and the unlocking position. The locking end 4280 may abut against the engaging part 4520 when in the locking position and may separate from the engaging part 4520 when in the unlocking position. Specifically, the locking end 4280 includes a stop surface 4210 and a sliding mating surface 4220. As shown in FIGS. 11A-11B, in the locking position, the stop surface 4210 abuts against the engaging surface 4522, thereby preventing the locking member 4200 from passing over the engaging part 4520 and moving in the second direction, and thus preventing the housing 4100 and in turn the backrest 1200 from moving towards the operation end 4530; in the unlocking position, the stop surface 4210 is misaligned and separated from the engaging surface 4522, thereby allowing the backrest 1200 to move towards the operation end 4530 or the fixed end 4540.

In addition, the sliding mating surface 4220 is configured to be in sliding fit with the sliding surface 4521 of the engaging part 4520 when the locking end 4280 is in the locking position. Specifically, when the user pulls the operation end 4530, the sliding mating surface 4220 is in sliding fit with the sliding surface 4521 of the engaging part 4520 to overcome a restoring force of the reset member 4400 and push the locking member 4200 towards the unlocking position, so that the locking member 4200 passes over the engaging part 4520 in the first direction, allowing the housing 4100 and thus the backrest 1200 to move towards the fixed end 4540. In the locking position, the sliding mating surface 4220 and the sliding surface 4521 are both inclined relative to the extension direction of the channel. As shown in FIG. 11A, the sliding mating surface 4220 forms a second angle β with the extension direction of the channel, and the second angle β is greater than or equal to (preferably equal to) the first angle α.

In conclusion, when in the locking position, the locking member 4200 configured as the locking end 4280 forms the unidirectional lock with the adjusting member 4500 through the stop surface 4210 and the sliding mating surface 4220, that is, the locking member 4200 may only move in the first direction and cannot move in the second direction.

As shown in FIGS. 9-10, the adjusting device 4000 includes two adjusting members 4500, which are respectively connected to left and right sides of the frame 1300 (specifically, left and right sides of the backrest 1200), pass through the same housing 4100 and are located on one side of the same locking member 4200. Specifically, for each adjusting member 4500, the housing 4100 is provided with the corresponding first guide hole 4120; the sliding connection parts 4510 and the engaging parts 4520 of the two adjusting members 4500 enter the receiving chamber 4110 through the respective first guide holes 4120, and leave the receiving chamber 4110 to the outside of the housing 4100 through the common second guide hole 4130. Specifically, the first guide holes 4120 are located on left and right sides of the housing 4100, while the second guide hole 4130 is located on an upper side of the housing 4100. That is, the operation ends 4530 of the two adjusting members 4500 may move to above the housing 4100 through the first guide holes 4120 and the second guide hole 4130.

As described above, the release member 4300 is configured to drive the locking member 4200 to move from the locking position to the unlocking position. The way in which the release member 4300 is arranged will be described below.

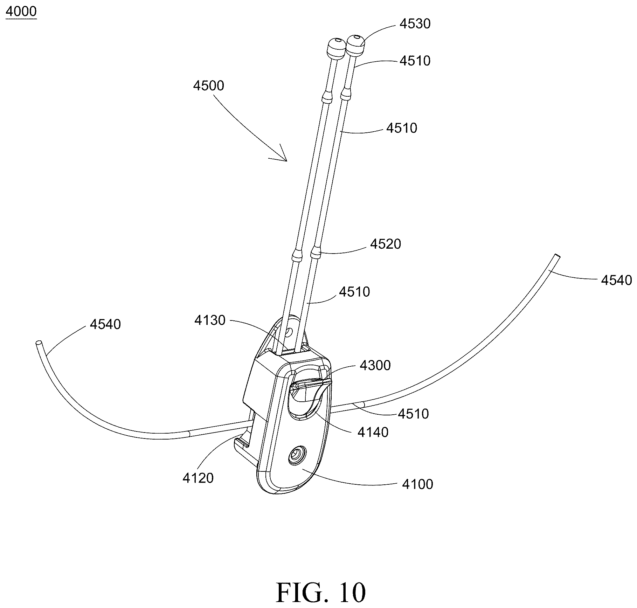

As shown in FIGS. 10-11B, the housing 4100 includes an opening 4140 in communication with the receiving chamber 4110, and the release member 4300 is movably received in the opening 4140. The release member 4300 includes a pressing end 4310 located outside the receiving chamber 4110 and an abutting end 4320 located at the opening 4140. The pressing end 4310 is configured in such a way that force may be exerted on the pressing end to overcome the restoring force of the reset member 4400 and drive the locking member 4200 to move towards the unlocking position.

As shown in FIGS. 10 to 11B, the housing 4100 may include the front housing 4100a and the rear housing 4100b, which are interconnected and define the receiving chamber 4110. The opening 4140 for receiving the release member 4300 may be provided on one of the front housing 4100a and the rear housing 4100b, but this embodiment is not limited thereto. The description about the previous embodiments may also be applied to this embodiment, so the specific structure and variations of the housing 4100 will not be repeated.

The release member 4300 further includes an extension part 4360, which is configured to enter the receiving chamber 4110 through the opening 4140 when the release member 4300 moves from the locking position to the unlocking position. The way in which the release member 4300 cooperates with the locking member 4200 will be described in detail below.

The locking member 4200 is designed as a rotatable pawl that includes the locking end 4280. The release member 4300 is constructed separately from or integrally with the locking member 4200 at the abutting end 4320. The reset member 4400 is a torsion spring disposed in the locking member 4200. As shown in FIG. 11A, in the absence of external force, the locking end 4280 abuts against the engaging surface 4522 through the stop surface 4210 under an elastic force of the torsion spring, and the abutting end 4320 of the release member 4300 abuts against an edge of the opening 4140 to limit the locking position of the locking member 4200. As shown in FIG. 11B, in the presence of external force, 1) when the user presses the pressing end 4310 of the release member 4300, the release member 4300 overcomes the elastic force of the torsion spring and drives the locking member 4200 to rotate to the unlocking position, in which case the locking member 4200 may move relative to the adjusting member 4200 in the first direction or in the second direction; 2) when the user pulls the operation end 4530, the sliding surface 4521 of the engaging part 4520 is in sliding fit with the sliding mating surface 4220 of the locking end 4280 to overcome the elastic force of the torsion spring to push the locking member 4200 to rotate towards the unlocking position, in which case the release member 4300 also rotates and the extension part 4360 enters the receiving chamber 4110 through the opening 4140. Thus, when the user pulls the operation end 4530, the locking member 4200 may move relative to the adjusting member 4200 in the first direction. When the locking end 4280 switches between the locking position and the unlocking position, the locking member 4200 undergoes a pivotal motion.

Optionally, the extension part 4360 is configured to at least partially have an arcuate outer surface, and the edge of the opening 4140 is rounded, so that when the extension part 4360 rotates towards an interior of the housing 4100, the extension part 4360 may enter the receiving chamber 4110 more smoothly through the cooperation of its arcuate outer surface and the rounded edge of the opening.

Specific implementations of a fourth embodiment will be described in detail with reference to FIG. 12.

FIG. 12 is a perspective view of an adjusting device 5000 according to the fourth embodiment of the present disclosure. This embodiment mainly differs from the third embodiment in that two operation ends 5530 are connected together to form a single node, so that the user may pull two adjusting members 5500 through this node without missing either operation end 5530. Otherwise, a length of the unpulled adjusting member 5500 between its fixed end 5540 and the locking member will remain unchanged, resulting in uneven force distribution on both sides of the backrest 1200, which may cause the backrest 1200 to tilt, and pose a safety hazard for the baby or pet seated in the carrier 1000. Preferably, as shown in FIG. 12, the adjusting members 5500 form a pull-ring shape at the operation end 5530, which further facilitates the user to pull the adjusting members and achieve convenient and fast backrest adjustment.

Optionally, the adjusting device 5000 may include a single adjusting member 5500, with both ends of the adjusting member 5500 serving as fixed ends 5540 secured to the frame 1300, and a middle position of the adjusting member 5500 serving as an operation end 5530. It may be envisaged that during production, both ends of the adjusting member 5500 first pass through a second guide hole 5130 and then pass through first guide holes 5120, so as to be fixed to the frame 1300 through fixing ring buckles, for example. Thus, during adjustment of the backrest 1200, the user may simply pull the middle position of the adjusting member 5500, making the operation simple and fast. Certainly, similar to other embodiments described above, a size of the operation end 5530 is larger than a size of the second guide hole 5130 to prevent the adjusting member 5500 from retracting into the housing 5100 through the second guide hole 5130.

Optionally, the adjusting device 5000 includes a plurality of individual adjusting members 5500 to enhance the overall strength of the adjusting members. Correspondingly, the housing 5100 includes a plurality of first guide holes 5120 and a plurality of second guide holes 5130 for the plurality of adjusting members to pass through respectively. It should be understood that although only two adjusting members are shown in the figures, more than two adjusting members are also feasible. Specifically, the frame 1300 may be provided with a plurality of fixing points (such as two on the left and two on the right), and fixed ends of the plurality of adjusting members are connected to these fixing points; and operation ends pass through first guide holes and second guide holes on the housing, respectively. In such a case, if the locking member is configured to have a locking hole, there may also be a plurality of locking holes, e.g., arranged in two columns on left and right sides of the first inclined surface, or arranged in a surrounding manner around the first inclined surface. The present disclosure does not specifically limit in this aspect.

In this embodiment, the adjusting member 5500 is a pull rope, the sliding connection part 5510 is a body of the pull rope, and the engaging part 5520 is directly formed by knotting the pull rope. A maximum width of the engaging part 5520 located in the channel (through which the adjusting member 5500 passes) of the housing in the direction perpendicular to the extension direction of the channel is greater than a maximum width of the sliding connection part 5510 located in the channel of the housing in the direction perpendicular to the extension direction of the channel.

In conclusion, for the adjusting device according to the present disclosure, since the adjusting member includes sliding connection parts and engaging parts disposed alternately, with one engaging part between every two adjacent sliding connection parts, the locking member may be locked at the engaging part within a movement range of two sliding connection parts, and thus the frame and the backrest of the carrier provided with the adjusting device may be maintained at a desired distance. In addition, the locking member may slide with no obstruction on the sliding connection part and be locked at the engaging part, and the engaging part and the locking member may cooperate with each other through their respective inclined surfaces, so that when the user wants to tilt the backrest backwards, the user needs to press the release member and, after release, exert downward pressure on the backrest; after the locking member passes over the engaging part, no further force is required on the release member, and the locking member may slide freely on the sliding connection part until it contacts the next engaging part and is stopped by the next engaging part, which makes it easier for the user to tilt the backrest backwards. When the user wants to move the backrest upwards, the user only needs to pull the adjusting member at the operation end (without need to press the release member) to realize upward movement of the backrest. In short, the locking member forms the unidirectional lock with the adjusting member. In this way, the baby's back remains supported by the backrest during the upward movement of the backrest; and lowering the backrest needs deliberate release in order to avoid the risk that the baby loses support and s injured due to the sudden downward movement of the backrest.

Correspondingly, the carrier provided with the adjusting device of the present disclosure also has the same technical effects, which will not be repeated herein.

It should be understood that the above description merely involves exemplary embodiments of the present disclosure and is not intended to limit the protection scope of the present disclosure; and equivalent variations made in accordance with the claims of the present disclosure fall into the scope of the present disclosure.

## Claims

1. An adjusting device (2000, 3000, 4000, 5000) comprising:
a locking member (2200, 3200, 4200) having a locking position and an unlocking position; and
an adjusting member (2500, 3500, 4500, 5500) comprising a fixed end (2540, 3540, 4540, 5540), an operation end (2530, 3530, 4530, 5530), at least two sliding connection parts (2510, 3510, 4510, 5510) and at least one engaging part (2520, 3520, 4520, 5520), the at least two sliding connection parts (2510, 3510, 4510, 5510) and the at least one engaging part (2520, 3520, 4520, 5520) being located between the fixed end (2540, 3540, 4540, 5540) and the operation end (2530, 3530, 4530, 5530) and being alternately disposed,
wherein each sliding connection part (2510, 3510, 4510, 5510) is in sliding fit with the locking member (2200, 3200, 4200), to allow the locking member (2200, 3200, 4200) to slide relative to the adjusting member (2500, 3500, 4500, 5500) on the sliding connection part (2510, 3510, 4510, 5510);
when the locking member (2200, 3200, 4200) is in the locking position, the engaging part (2520, 3520, 4520, 5520) blocks the locking member (2200, 3200, 4200) from sliding relative to the adjusting member (2500, 3500, 4500, 5500) from a side of the engaging part (2520, 3520, 4520, 5520) away from the operation end (2530, 3530, 4530, 5530) towards the operation end (2530, 3530, 4530, 5530);
when the locking member (2200, 3200, 4200) is in the unlocking position, the locking member (2200, 3200, 4200) is slidable relative to the adjusting member (2500, 3500, 4500, 5500) from the side of the engaging part (2520, 3520, 4520, 5520) away from the operation end (2530, 3530, 4530, 5530) towards the operation end (2530, 3530, 4530, 5530).

2. The adjusting device (2000, 3000, 4000, 5000) according to claim 1, further comprising a housing (2100, 3100, 4100, 5100) defining a channel for the adjusting member (2500, 3500, 4500, 5500) to pass through, wherein:
the locking member (2200, 3200, 4200) is movable relative to the housing (2100, 3100, 4100, 5100) between the unlocking position and the locking position;
a gap is formed between the locking member (2200, 3200, 4200) and the housing (2100, 3100, 4100, 5100) to allow the adjusting member (2500, 3500, 4500, 5500) to pass through;
when the locking member (2200, 3200, 4200) is in the locking position, in a direction perpendicular to an extension direction of the channel, a minimum width of the gap is less than a maximum width of the engaging part (2520, 3520, 4520, 5520) located in the channel and is larger than a maximum width of the sliding connection part (2510, 3510, 4510, 5510) located in the channel;
when the locking member (2200, 3200, 4200) is in the unlocking position, in the direction perpendicular to the extension direction of the channel, the minimum width of the gap is greater than or equal to the maximum width of the engaging part (2520, 3520, 4520, 5520) located in the channel and is greater than the maximum width of the sliding connection part (2510, 3510, 4510, 5510) located in the channel;
optionally, wherein an inner surface of the housing (2100, 3100, 4100, 5100) is provided with a first limiting part (2170, 3170), and the locking member is provided with a positioning part (2250, 3250) that is configured to abut against the first limiting part (2170, 3170) in the locking position to maintain the locking member (2200, 3200, 4200) in the locking position.

3. The adjusting device (2000, 3000, 4000, 5000) according to claim 1 or 2, wherein a circumferential outer surface of each engaging part (2520, 3520, 4520, 5520) protrudes outwards with respect to a circumferential outer surface of each sliding connection part (2510, 3510, 4510, 5510).

4. The adjusting device (2000, 3000, 4000, 5000) according to claim 2, wherein the housing (2100, 3100, 4100, 5100) is provided with a guide hole for the adjusting member (2500, 3500, 4500, 5500) to pass through, and the locking member (2200, 3200, 4200) is provided with a locking hole (2230, 3230) for the adjusting member (2500, 3500, 4500, 5500) to pass through;
the gap is a portion where the locking hole (2230, 3230) and the guide hole overlap in the extension direction of the channel.

5. The adjusting device (2000, 3000, 4000, 5000) according to claim 3, wherein when the locking member (2200, 3200, 4200) is in the locking position, the minimum width of the gap is defined by a hole wall of the locking hole (2230, 3230) close to the sliding connection part (2510, 3510, 4510, 5510) and a hole wall of the guide hole, wherein the hole wall of the locking hole (2230, 3230) and the hole wall of the guide hole are located on opposite sides of the sliding connection part (2510, 3510, 4510, 5510) in the direction perpendicular to the extension direction of the channel.

6. The adjusting device (2000, 3000, 4000, 5000) according to any one of claims 1 to 5, wherein each of the engaging parts (2520, 3520, 4520, 5520) has a sliding surface (2521, 3521, 4521) and an engaging surface (2522, 3522, 4522), the sliding surface (2521, 3521, 4521) is close to the operation end (2530, 3530, 4530, 5530), and the engaging surface (2522, 3522, 4522) is close to the fixed end (2540, 3540, 4540, 5540);
the sliding surface (2521, 3521, 4521) is inclined relative to a movement direction of the locking member (2200, 3200, 4200) between the locking position and the unlocking position;
when the locking member (2200, 3200, 4200) is in the locking position, the engaging surface (2522, 3522, 4522) blocks the locking member (2200, 3200, 4200) from sliding relative to the adjusting member (2500, 3500, 4500, 5500) from the side of the engaging part (2520, 3520, 4520, 5520) away from the operation end (2530, 3530, 4530, 5530) towards the operation end (2530, 3530, 4530, 5530), and the sliding surface (2521, 3521, 4521) allows the locking member (2200, 3200, 4200) to slide relative to the adjusting member (2500, 3500, 4500, 5500) from a side of the engaging part (2520, 3520, 4520, 5520) close to the operation end (2530, 3530, 4530, 5530) towards the fixed end (2540, 3540, 4540, 5540) and to move from the locking position to the unlocking position;
optionally, wherein the locking member (2200, 3200, 4200) has a stop surface (2210, 3210, 4210), wherein the stop surface abuts against the engaging surface (2522, 3522, 4522) in the locking position and is misaligned and separated from the engaging surface (2522, 3522, 4522) in the unlocking position.

7. The adjusting device (2000, 3000, 4000, 5000) according to any one of claims 1 to 5, further comprising:
a release member (2300, 3300, 4300), configured to drive the locking member (2200, 3200, 4200) to move from the locking position to the unlocking position; and
a reset member (2400, 3400, 4400), configured to normally exert on the locking member (2200, 3200, 4200) a force that causes the locking member (2200, 3200, 4200) to return to the locking position.

8. The adjusting device (2000, 3000, 4000, 5000) according to claim 7, further comprising:
a first inclined surface (3270) provided on the locking member (2200, 3200, 4200) and inclined relative to a movement direction of the locking member (2200, 3200, 4200) between the locking position and the unlocking position; and
a second inclined surface (3350) formed on the release member (2300, 3300, 4300) and inclined relative to a movement direction of the release member (2300, 3300, 4300),
wherein the first inclined surface (3270) and the second inclined surface (3350) are in contact with each other and are slidable relative to each other, so that the movement direction of the release member (2300, 3300, 4300) is convertible into the movement direction of the locking member (2200, 3200, 4200) between the locking position and the unlocking position.

9. The adjusting device (2000, 3000, 4000, 5000) according to any one of claims 1 to 5, wherein the adjusting member (2500, 3500, 4500, 5500) is a pull rope, each sliding connection part (2510, 3510, 4510, 5510) is a body of the pull rope, and each engaging part (2520, 3520, 4520, 5520) is formed by knotting the pull rope.

10. The adjusting device (2000, 3000, 4000, 5000) according to claim 2, wherein the housing (2100, 3100, 4100, 5100) comprises a first guide hole (2120, 3120, 4120, 5120) and a second guide hole (2130, 3130, 4130, 5130), which are located at different sides of the housing (2100, 3100, 4100, 5100) and are communication with the receiving chamber;
the adjusting member (2500, 3500, 4500, 5500) passes through the housing (2100, 3100, 4100, 5100) via the first guide hole (2120, 3120, 4120, 5120) and the second guide hole (2130, 3130, 4130, 5130).

11. The adjusting device (2000, 3000, 4000, 5000) according to claim 10, wherein the locking member (2200, 3200, 4200) comprises a locking hole (2230, 3230) that penetrates the locking member (2200, 3200, 4200) along the extension direction of the channel, and the adjusting member (2500, 3500, 4500, 5500) passes through the locking hole (2230, 3230) inside the housing (2100, 3100, 4100, 5100);
optionally, wherein the gap is a portion where the locking hole (2230, 3230) and the second guide hole (2130, 3130, 4130, 5130) overlap in the extension direction of the channel;
optionally, wherein the locking member (2200, 3200, 4200) has a sliding mating surface (2220) that forms at least a portion of a circumferential wall of the locking hole (2230, 3230).

12. The adjusting device (2000, 3000, 4000, 5000) according to claim 2, wherein the locking member (2200, 3200, 4200) comprises a locking end (4280), and the adjusting member (2500, 3500, 4500, 5500) passes through the housing (2100, 3100, 4100, 5100) and is clamped between the locking end (4280) and the housing (2100, 3100, 4100, 5100);
optionally, wherein, in the locking position, the width of the gap is defined by a side surface of the locking end (4280) close to the sliding connection part (2510, 3510, 4510, 5510) and an inner surface of the housing (2100, 3100, 4100, 5100), wherein the side surface of the locking end (4280) and the inner surface of the housing (2100, 3100, 4100, 5100) are located on opposite sides of the sliding connection part (2510, 3510, 4510, 5510) in the direction perpendicular to the extension direction of the channel.

13. The adjusting device (2000, 3000, 4000, 5000) according to claim 7, wherein the release member (2300, 3300, 4300) comprises a pressing end (2310, 3310, 4310) located outside the housing (2100, 3100, 4100, 5100) and an abutting end (2320, 3320, 4320) located inside the housing (2100, 3100, 4100, 5100);
the pressing end (2310, 3310, 4310) is configured in such a way that force is exerted on the pressing end (2310, 3310, 4310) to overcome a restoring force of the reset member (2400, 3400, 4400) and drive the locking member (2200, 3200, 4200) to move towards the unlocking position;
optionally, wherein the pressing end (2310) has a groove (2330), an opening direction of the groove (2330) being perpendicular to a direction of a pressing force, and the locking member (2200) comprises a connecting part (2240) extending into the groove (2330) and fitted with the groove (2330).

14. The adjusting device (2000, 3000, 4000, 5000) according to claim 13, wherein the inner surface of the housing (2100, 3100, 4100, 5100) comprises a second limiting part (2180, 3180) that is spaced apart from the abutting end (2320, 3320, 4320) in the direction perpendicular to the extension direction of the channel;
the second limiting part (2180, 3180) and the abutting end (2320, 3320, 4320) are configured to limit a position of the reset member (2400, 3400, 4400).

15. A carrier (1000), mounted with the adjusting device (2000, 3000, 4000, 5000) according to any one of claims 1 to 14, wherein the carrier (1000) comprises:
a seat (1100);
a backrest (1200) pivotally connected to the seat (1100); and
a frame (1300), the seat (1100) being fixed relative to the frame (1300) when the carrier (1000) is in an unfolded state,
wherein the fixed end (2540, 3540, 4540, 5540) is connected to the frame (1300), and the locking member (2200, 3200, 4200) is connected to the backrest (1200).
